(19) Europäisches Patentamt
European Patent Office
Office européen des brevets

(11) **EP 4 660 818 A1**

(12) **EUROPEAN PATENT APPLICATION**
published in accordance with Art. 153(4) EPC

(43) Date of publication:
**10.12.2025 Bulletin 2025/50**

(21) Application number: **24792038.2**

(22) Date of filing: **17.04.2024**

(51) International Patent Classification (IPC):
**G06F 16/11** *(2019.01)*

(52) Cooperative Patent Classification (CPC):
**G06F 16/11; G06F 16/21; G06F 16/22; G06F 16/23; G06F 16/27**

(86) International application number:
**PCT/CN2024/088300**

(87) International publication number:
**WO 2024/217453 (24.10.2024 Gazette 2024/43)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **20.04.2023 CN 202310460198**

(71) Applicant: **Huawei Technologies Co., Ltd.
Shenzhen, Guangdong 518129 (CN)**

(72) Inventors:
• **WANG, Yao
Shenzhen, Guangdong 518129 (CN)**

• **SUN, Chumin
Shenzhen, Guangdong 518129 (CN)**
• **LIU, Bowen
Shenzhen, Guangdong 518129 (CN)**
• **ZHOU, Li
Shenzhen, Guangdong 518129 (CN)**
• **LEE, Choonmeng
Shenzhen, Guangdong 518129 (CN)**
• **YUNG, Manhong
Shenzhen, Guangdong 518129 (CN)**
• **SUN, Jie
Shenzhen, Guangdong 518129 (CN)**

(74) Representative: **Maiwald GmbH
Engineering
Elisenhof
Elisenstrasse 3
80335 München (DE)**

(54) **DISTRIBUTED DATA STORAGE METHOD AND CONTROLLER**

(57) Embodiments of this application provide a distributed data storage method and a controller. The method includes: obtaining a log, where the log indicates N pieces of data used in M historical tasks executed by a server cluster, M is a positive integer, and the N pieces of data are stored in the server cluster in a distributed manner; determining intimacy between the N pieces of data based on the log, where intimacy corresponding to any two of the N pieces of data indicates a possibility that the two pieces of data are used in a same task, and N is an integer greater than 1; and updating storage locations of the N pieces of data based on the intimacy between the N pieces of data. Solutions in embodiments of this application help implement proper data storage, thereby improving running performance.

300

Obtain a log, where the log indicates N pieces of data used in M historical tasks executed by a server cluster, M is a positive integer, and N is an integer greater than 1 — 310

Determine intimacy between the N pieces of data based on the log, where intimacy corresponding to any two of the N pieces of data indicates a possibility that the two pieces of data are used in a same task — 320

Update storage locations of the N pieces of data based on the intimacy between the N pieces of data — 330

FIG. 3

## Description

This application claims priority to Chinese Patent Application No. 202310460198.0, filed with the China National Intellectual Property Administration on April 20, 2023 and entitled "DISTRIBUTED DATA STORAGE METHOD AND CONTROLLER".

## TECHNICAL FIELD

Embodiments of this application relate to the field of data processing technologies, and more specifically, to a distributed data storage method and a controller.

## BACKGROUND

In a distributed storage scenario, data is stored in different devices. When a distributed transaction is executed, data used in the transaction may be stored in different devices, and the data used in the transaction usually needs to be aggregated into one device. An improper data storage manner causes an increase in migration costs in a transaction execution process, and affects transaction execution efficiency. A distributed database is used as an example. A data amount of the distributed database is usually more than one million, a data amount of a query transaction is usually more than ten thousand, and an overall data amount may reach hundreds of millions. In this case, if a data storage manner is improper, migration costs are greatly increased, and transaction execution efficiency is severely affected.

How to implement proper data storage becomes an urgent problem to be resolved.

## SUMMARY

Embodiments of this application provide a distributed data storage method and a controller, to help implement proper data storage, thereby improving running performance.

According to a first aspect, a distributed data storage method is provided, including: obtaining a log, where the log indicates N pieces of data used in M historical tasks executed by a server cluster, M is a positive integer, and the N pieces of data are stored in the server cluster in a distributed manner; determining intimacy between the N pieces of data based on the log, where intimacy corresponding to any two of the N pieces of data indicates a possibility that the two pieces of data are used in a same task, and N is an integer greater than 1; and updating storage locations of the N pieces of data based on the intimacy between the N pieces of data.

In the solution in this embodiment of this application, intimacy between data is determined based on the log, and a data layout manner, in other words, a storage location corresponding to the data, is further determined based on the intimacy. This helps reduce communication costs caused by data migration in a process of executing a task, and reduce migration costs, thereby improving running performance. For example, a plurality of pieces of data that have a high possibility to be used in a same task are stored in a same storage location, that is, a same server, as much as possible. In this way, a quantity of data migrations during task execution can be reduced, and the migration costs can be reduced, so that processing efficiency of the task is improved.

With reference to the first aspect, in some implementations of the first aspect, the determining intimacy between the N pieces of data based on the log includes: determining the intimacy between the N pieces of data based on a quantity of times that the N pieces of data are used in a same historical task in the M historical tasks.

In this embodiment of this application, intimacy between two pieces of data is determined based on a quantity of times that the two pieces of data in the log are used in a same historical task. This solution is simple and efficient, and helps quickly determine an intimacy relationship, so that processing efficiency is improved. In addition, the intimacy relationship can be updated as the log changes, so that the intimacy relationship can more accurately reflect a current environment, to facilitate subsequent implementation of more proper data distribution.

With reference to the first aspect, in some implementations of the first aspect, the intimacy corresponding to any two of the N pieces of data is in a positive correlation relationship with a quantity of times that the two pieces of data are used in a same historical task in the M historical tasks.

In other words, a larger quantity of times that any two pieces of data are used in a same historical task indicates higher intimacy corresponding to the two pieces of data.

With reference to the first aspect, in some implementations of the first aspect, the updating storage locations of the N pieces of data based on the intimacy between the N pieces of data includes: updating the storage locations of the N pieces of data based on a first storage solution, where the first storage solution indicates target storage locations of the N pieces of data in P servers in the server cluster, P is an integer greater than 1, a statistical value of intimacy between the P servers in the first storage solution is less than or equal to a first threshold, and intimacy between two of the P servers in the first storage solution is based on intimacy between data corresponding to one of the two servers and data corresponding to the other server.

For example, if each of two servers corresponds to one piece of data, intimacy between the two servers may be intimacy between data corresponding to one of the two servers and data corresponding to the other server.

For example, if at least one of two servers corresponds to a plurality of pieces of data, intimacy between the two servers may be a sum of intimacy between data corresponding to one of the two servers and data corresponding to the other server.

For example, when P>2, the statistical value of the intimacy between the P servers may be an average value, a sum, or the like of the intimacy between the P servers. When P=2, the statistical value of the intimacy between the P servers may be the intimacy between the two servers.

In this embodiment of this application, the statistical value of the intimacy between the P servers in the first storage solution is less than or equal to the first threshold. This helps store data with high intimacy in a same server, to reduce data migration costs during task execution, so that task execution efficiency is improved.

With reference to the first aspect, in some implementations of the first aspect, the first storage solution is an element in a set including a plurality of storage solutions, each of the plurality of storage solutions indicates a type of different storage location of the N pieces of data in the P servers, and the first threshold is a smallest value of statistical values of intimacy between the P servers in storage solutions other than the first storage solution in the plurality of storage solutions.

Each of the plurality of storage solutions indicates one correspondence between the N pieces of data and the P servers, that is, indicates a type of storage location of the N pieces of data in the P servers. Different storage solutions indicate different correspondences.

With reference to the first aspect, in some implementations of the first aspect, the updating storage locations of the N pieces of data based on the intimacy between the N pieces of data includes: sending scheduling information to a first server in the server cluster and a second server in the server cluster based on the intimacy between the N pieces of data, where the scheduling information indicates to migrate, to the second server, first data that is in the N pieces of data and that is stored in the first server.

With reference to the first aspect, in some implementations of the first aspect, the updating storage locations of the N pieces of data based on the intimacy between the N pieces of data includes: determining a target storage location of each piece of data with an objective of making quantities of pieces of data stored in the P servers the same and the statistical value of the intimacy between the P servers the smallest.

In this embodiment of this application, the target storage location of each piece of data is determined with an objective of making the quantities of pieces of data stored in the P servers the same. This helps ensure load balancing on each server and implement balanced storage. The target storage locations of the N pieces of data are determined with an objective of making the intimacy between the P servers the smallest. This helps ensure that data with high intimacy is stored in a same server, to reduce the data migration costs during the task execution, so that the task execution efficiency is improved. In other words, the solution in this embodiment of this application helps reduce the data migration costs during the task execution while ensuring the balanced storage, so that the task execution efficiency is improved.

With reference to the first aspect, in some implementations of the first aspect, the determining intimacy between the N pieces of data based on the log includes: constructing a first intimacy relationship graph based on the log, where each of N nodes in the first intimacy relationship graph corresponds to one of the N pieces of data, and a weight of an edge between two nodes in the first intimacy relationship graph indicates intimacy between two pieces of data corresponding to the two nodes.

For example, a weight of an edge between two nodes in the first intimacy relationship graph may be based on a quantity of times that two pieces of data corresponding to the two nodes are simultaneously used in the log.

For example, in the first intimacy relationship graph, a weight of an edge between two nodes is in a positive correlation relationship with a quantity of times that two pieces of data corresponding to the two nodes are simultaneously used in the log.

In this embodiment of this application, the first intimacy relationship graph may be constructed based on the log, and an intimacy relationship between different pieces of data is indicated in a form of a weighted graph. A graph construction solution is simple and effective, and helps improve the processing efficiency.

With reference to the first aspect, in some implementations of the first aspect, the constructing a first intimacy relationship graph based on the log includes: constructing a second intimacy relationship graph based on the log, where each of N nodes in the second intimacy relationship graph corresponds to one of the N pieces of data, and in a process of constructing the second intimacy relationship graph, one edge is separately connected between nodes corresponding to data used in an mth historical task in the M historical tasks, where m=1, 2, ..., M; and determining the first intimacy relationship graph based on the second intimacy relationship graph, where each of the N nodes in the second intimacy relationship graph corresponds to one node in the first intimacy relationship graph, and a weight of an edge between two nodes in the first intimacy relationship graph is based on a quantity of edges between two corresponding nodes in the second intimacy relationship graph.

For example, a weight of an edge between two of a plurality of nodes in the first intimacy relationship graph may be in a positive correlation relationship with a quantity of edges between two corresponding nodes in the second intimacy relationship graph.

According to the solution in this embodiment of this application, an edge is constructed between two nodes to indicate that data corresponding to the two nodes is used in a same historical task in the log, so that the intimacy between the N pieces of data is further obtained. In this manner, fast modeling can be implemented, in other words, a speed of determining the intimacy is improved. In addition, in the process of constructing the second intimacy relationship graph, a quantity of edges between nodes varies with data used in different historical tasks in the log. This helps ensure authenticity of intimacy between data.

With reference to the first aspect, in some implementations of the first aspect, P subgraphs of the first intimacy relationship graph respectively correspond to the P servers, the P subgraphs are obtained by dividing the first intimacy relationship graph with an objective of making quantities of nodes in the P subgraphs the same and a statistical value of a weight of an edge between the P subgraphs the smallest, and in the P servers, a target storage location of each piece of data is a server corresponding to a subgraph that is in the P subgraphs and to which a node corresponding to each piece of data belongs.

In this embodiment of this application, data distribution may be determined in a graph cutting manner, in other words, a data distribution problem is planned as a graph cutting problem. In this way, the data distribution may be determined by using a graph cutting solving method. This improves solving efficiency. Specifically, graph cutting is performed with an objective of making quantities of nodes in subgraphs the same and a weight of an edge between different subgraphs the smallest, and the P subgraphs respectively correspond to the P servers. Graph cutting is performed with an objective of making the quantities of nodes in the subgraphs the same. This helps ensure load balancing on each server and implement balanced storage. Graph cutting is performed with an objective of making the weight of the edge between different subgraphs the smallest. This helps ensure that data with high intimacy is stored in a same server, to reduce the data migration costs during the task execution, so that the task execution efficiency is improved.

With reference to the first aspect, in some implementations of the first aspect, P subgraphs of the second intimacy relationship graph respectively correspond to the P servers, the P subgraphs are obtained by dividing the second intimacy relationship graph with an objective of making quantities of nodes in the P subgraphs the same and a statistical value of a quantity of edges between the P subgraphs the smallest, and in the P servers, a target storage location of each piece of data is a server corresponding to a subgraph that is in the P subgraphs and to which a node corresponding to each piece of data belongs.

With reference to the first aspect, in some implementations of the first aspect, the dividing the first intimacy relationship graph with an objective of making quantities of nodes in the P subgraphs the same and a statistical value of a weight of an edge between the P subgraphs the smallest is implemented based on a quantum heuristic algorithm.

With reference to the first aspect, in some implementations of the first aspect, P=2, and an objective function of the quantum heuristic algorithm satisfies the following formula:

$$\min\left[-\frac{1}{2}\sum_{i=1}^{N}\sum_{j=1}^{N}J_{i,j}s_{i}s_{j}\right]$$

$s_i$ is an ith spin variable in N spin variables, $s_j$ is a jth spin variable in the N spin variables, the N spin variables respectively correspond to the N pieces of data, a value of the spin variable is 1 or -1, data corresponding to spin variables with a same value belongs to a same subgraph, $J_{i,j}$ indicates a relationship between an ith piece of data and a jth piece of data, and $J_{i,j}$ is determined based on intimacy between the ith piece of data and the jth piece of data.

With reference to the first aspect, in some implementations of the first aspect, the first intimacy relationship graph is represented by a matrix, the matrix includes N rows and N columns, each of the N rows corresponds to one node in the first intimacy relationship graph, each of the N columns corresponds to one node in the first intimacy relationship graph, and each element in the matrix indicates a weight of an edge between a node corresponding to a row in which the element is located and a node corresponding to a column in which the element is located.

In this embodiment of this application, the first intimacy relationship graph may be indicated by the matrix, and an element in the matrix is a weight of an edge in the first intimacy relationship graph. In this way, during the graph cutting, calculation may be performed based on the matrix. This helps improve a solving speed.

According to a second aspect, a controller is provided, including a processor, configured to determine intimacy between N pieces of data based on a log, where intimacy corresponding to any two of the N pieces of data indicates a possibility that the two pieces of data are used in a same task, N is an integer greater than 1, the log indicates the N pieces of data used in M historical tasks executed by a server cluster, M is a positive integer, and the N pieces of data are stored in the server cluster in a distributed manner; and an interface circuit, configured to update storage locations of the N pieces of data based on the intimacy between the N pieces of data.

With reference to the second aspect, in some implementations of the second aspect, the processor is specifically configured to determine the intimacy between the N pieces of data based on a quantity of times that the N pieces of data are used in a same historical task in the M historical tasks.

With reference to the second aspect, in some implementations of the second aspect, the intimacy corresponding to any two of the N pieces of data is in a positive correlation relationship with a quantity of times that the two pieces of data are used in a same historical task in the M historical tasks.

With reference to the second aspect, in some implementations of the second aspect, the interface circuit is specifically configured to update the storage locations of the N pieces of data based on a first storage solution, where the first storage solution indicates target storage locations of the N pieces of data in P servers in the server cluster, P is an integer greater than 1, a statistical value of intimacy between the P servers in the first storage solution is less than or equal to a first threshold, and intimacy between two of the P servers in the first storage solution is based on intimacy between data corresponding to one of the two servers and data corresponding to the other server.

With reference to the second aspect, in some implementations of the second aspect, the first storage solution is an element in a set including a plurality of storage solutions, each of the plurality of storage solutions indicates a type of different storage location of the N pieces of data in the P servers, and the first threshold is a smallest value of statistical values of intimacy between the P servers in storage solutions other than the first storage solution in the plurality of storage solutions.

With reference to the second aspect, in some implementations of the second aspect, the interface circuit is specifically configured to send scheduling information to a first server in the server cluster and a second server in the server cluster based on the intimacy between the N pieces of data, where the scheduling information indicates to migrate, to the second server, first data that is in the N pieces of data and that is stored in the first server.

With reference to the second aspect, in some implementations of the second aspect, the processor is specifically configured to construct a first intimacy relationship graph based on the log, where each of N nodes in the first intimacy relationship graph corresponds to one of the N pieces of data, and a weight of an edge between two nodes in the first intimacy relationship graph indicates intimacy between two pieces of data corresponding to the two nodes.

With reference to the second aspect, in some implementations of the second aspect, the processor is specifically configured to: construct a second intimacy relationship graph based on the log, where each of N nodes in the second intimacy relationship graph corresponds to one of the N pieces of data, and in a process of constructing the second intimacy relationship graph, one edge is separately connected between nodes corresponding to data used in an $m^{th}$ historical task in the M historical tasks, where m=1, 2, ..., M; and determine the first intimacy relationship graph based on the second intimacy relationship graph, where each of the N nodes in the second intimacy relationship graph corresponds to one node in the first intimacy relationship graph, and a weight of an edge between two nodes in the first intimacy relationship graph is based on a quantity of edges between two corresponding nodes in the second intimacy relationship graph.

With reference to the second aspect, in some implementations of the second aspect, P subgraphs of the first intimacy relationship graph respectively correspond to the P servers, the P subgraphs are obtained by dividing the first intimacy relationship graph with an objective of making quantities of nodes in the P subgraphs the same and a statistical value of a weight of an edge between the P subgraphs the smallest, and in the P servers, a target storage location of each piece of data is a server corresponding to a subgraph that is in the P subgraphs and to which a node corresponding to each piece of data belongs.

With reference to the second aspect, in some implementations of the second aspect, the dividing the first intimacy relationship graph with an objective of making quantities of nodes in the P subgraphs the same and a statistical value of a weight of an edge between the P subgraphs the smallest is implemented based on a quantum heuristic algorithm.

With reference to the second aspect, in some implementations of the second aspect, P=2, and an objective function of the quantum heuristic algorithm satisfies the following formula:

$$\min\left[ -\frac{1}{2}\sum_{i=1}^{N}\sum_{j=1}^{N}J_{i,j}s_i s_j \right]$$

$s_i$ is an $i^{th}$ spin variable in N spin variables, $s_j$ is a $j^{th}$ spin variable in the N spin variables, the N spin variables respectively correspond to the N pieces of data, a value of the spin variable is 1 or -1, data corresponding to spin variables with a same value belongs to a same subgraph, $J_{i,j}$ indicates a relationship between an $i^{th}$ piece of data and a $j^{th}$ piece of data, and $J_{i,j}$ is determined based on intimacy between the $i^{th}$ piece of data and the $j^{th}$ piece of data.

With reference to the second aspect, in some implementations of the second aspect, the first intimacy relationship graph is represented by a matrix, the matrix includes N rows and N columns, each of the N rows corresponds to one node in the first intimacy relationship graph, each of the N columns corresponds to one node in the first intimacy relationship graph, and each element in the matrix indicates a weight of an edge between a node corresponding to a row in which the element is located and a node corresponding to a column in which the element is located.

It should be understood that extensions, definitions, explanations, and descriptions of related content in the first aspect are also applicable to same content in the second aspect.

According to a third aspect, a controller is provided, including a processor and a memory, and optionally, further including an input/output interface. The processor is configured to control the input/output interface to receive and send information. The memory is configured to store a computer program. The processor is configured to invoke the computer program from the memory and run the computer program, to enable the controller to perform the method according to any one of the first aspect or the possible implementations of the first aspect.

Optionally, the processor may be a general-purpose processor, and may be implemented by hardware or software. When the processor is implemented by the hardware, the processor may be a logic circuit, an integrated circuit, or the like. When the processor is implemented by the software, the processor may be a general-purpose processor, and is implemented by reading software code stored in the memory. The memory may be integrated into the processor, or may be located outside the processor and exist independently.

According to a fourth aspect, a computing device cluster is provided, including a plurality of servers and the controller according to any one of the second aspect and the implementations of the second aspect.

Optionally, the controller may be one of the plurality of servers, or the controller may be a server other than the plurality of servers.

According to a fifth aspect, a computer-readable medium is provided, including computer program instructions. When the computer program instructions are executed by a computing device cluster, the computing device cluster performs the method according to any one of the first aspect and the implementations of the first aspect.

According to a sixth aspect, a computer program product including instructions is provided. When the instructions are run by a computing device cluster, the computing device cluster is enabled to perform the method according to any one of the first aspect and the implementations of the first aspect.

For example, the computer-readable storage includes but is not limited to one or more of the following: a read-only memory (read-only memory, ROM), a programmable ROM (programmable ROM, PROM), an erasable PROM (erasable PROM, EPROM), a flash memory, an electrically EPROM (electrically EPROM, EEPROM), and a hard drive (hard drive).

Optionally, in an implementation, the foregoing storage medium may be specifically a non-volatile storage medium.

## BRIEF DESCRIPTION OF DRAWINGS

FIG. 1 is a schematic flowchart of a process of executing a query task;
FIG. 2 is a diagram of a data processing procedure according to an embodiment of this application;
FIG. 3 is a schematic flowchart of a distributed data storage method according to an embodiment of this application;
FIG. 4 is a diagram of a minimum balanced cut problem according to an embodiment of this application;
FIG. 5 is a schematic flowchart of another distributed data storage method according to an embodiment of this application;
FIG. 6 is a diagram of a second intimacy relationship graph according to an embodiment of this application;
FIG. 7 is a diagram of a first intimacy relationship graph according to an embodiment of this application;
FIG. 8 is a diagram of a division manner of a first intimacy relationship graph according to an embodiment of this application;
FIG. 9 is a diagram of another division manner of a first intimacy relationship graph according to an embodiment of this application;
FIG. 10 is a block diagram of a distributed data storage apparatus according to an embodiment of this application; and
FIG. 11 is a block diagram of a controller according to an embodiment of this application.

## DESCRIPTION OF EMBODIMENTS

The following describes technical solutions of embodiments in this application with reference to accompanying drawings.

Each aspect, embodiment, or feature is presented in this application with reference to a system including a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In embodiments of this application, "relevant (corresponding, relevant)" and "corresponding (corresponding)" may sometimes be mixed. It should be noted that meanings to be expressed by the two are consistent when a difference between the terms is not emphasized.

The service scenario described in embodiments of this application is intended to describe the technical solutions in embodiments of this application more clearly, and does not constitute a limitation on the technical solutions provided in embodiments of this application. A person of ordinary skill in the art may know that with evolution of network architectures and emergence of new service scenarios, the technical solutions provided in embodiments of this application are also applicable to similar technical problems.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

In this application, "at least one" means one or more, and "a plurality of" means two or more. The term "and/or" describes an association relationship for describing associated objects and indicates that three relationships may exist. For example, A and/or B may indicate the following cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

The solutions in embodiments of this application can be applied to a distributed storage scenario. To be specific, the solutions in embodiments of this application may be used to store data in different devices, for example, store the data in different servers or hard disks.

For example, the solutions in embodiments of this application may be applied to a distributed database server or a cloud-native database.

The cloud-native database may use advantages of a cloud platform such as elasticity and distributed, to implement cloud computing resource pooling and platform scale-up. The cloud-native database may implement distributed storage. Data accessed by a task or indexes of the data accessed by the task are stored in different servers. The database may also be referred to as a distributed database.

To better describe the solutions in embodiments of this application, the following first describes terms that may be used in this application.

(1) Ising (Ising) model

The Ising model is used to find a spin configuration that minimizes Ising energy.

For example, the Ising model may satisfy the following formula:

$$E_{I\sin g} = -\frac{1}{2}\sum_{i=1}^{N}\sum_{j=1}^{N}J_{i,j}s_{i}s_{j} - \sum_{i=1}^{N}h_{i}s_{i}$$

s indicates a spin variable, $s_i$ indicates an $i^{th}$ spin variable, $s_j$ indicates a $j^{th}$ spin variable, and a value of s is 1 or -1. N indicates a quantity of spin variables. N is an integer greater than 1. $J_{i,j}$ indicates coupling strength (or referred to as a coupling coefficient) between the $i^{th}$ spin variable and the $j^{th}$ spin variable. $h_i$ indicates a property of the $i^{th}$ spin variable. Specifically, $h_i$ indicates a local magnetic field on the $i^{th}$ spin variable. A value of $h_i$ may be 0.

The Ising model may alternatively be indicated in another form. This is not limited in embodiments of this application.

A solution of the Ising model may be indicated as a vector $(s_1, s_2, ..., s_N)$ with a spin as an element. An objective of the Ising model is to find a combination manner of a group of s, so that the Ising energy $E_{I\sin g}$ is smaller, and an optimal solution is a value of the vector $(s_1, s_2, ..., s_N)$ when a minimum value of $E_{I\sin g}$ is obtained.

The Ising model is often used as a model for solving a combination optimization problem.

A problem of computing an approximate solution that can make the energy of the Ising model smaller may be referred to as an Ising problem (Ising problem). The approximate solution is a solution that makes a value of an objective function closer to an optimal value.

(2) Quantum heuristic algorithm

The quantum heuristic algorithm may be used to solve the combination optimization problem, for example, the Ising problem.

The quantum heuristic algorithm is an algorithm running on a classical computer and obtained by performing classical approximation on a quantum part of a quantum annealing algorithm. The quantum heuristic algorithm may be regarded as a classical algorithm of quantum annealing.

For example, the quantum heuristic algorithm may include a simulated coherent Ising machine (simulated coherent Ising machine, SimSIM), a simulated bifurcation machine (simulated bifurcation machine, SBM), local quantum annealing (local quantum annealing, LQA), or the like.

(3) Simulated bifurcation (simulated bifurcation, SB) algorithm

The SBM may also be referred to as the SB algorithm.

In the simulated bifurcation algorithm, a solution is obtained by calculating variables $x_i$ and $y_i$. i=1,2, ..., N. N is a positive integer. Each of N variables $x_i$ and N variables $y_i$ corresponds to one spin variable $s_i$ of the Ising model. $x_i$ may be a location of a particle corresponding to $s_i$. $y_i$ may be momentum of the particle corresponding to $s_i$.

The simulated bifurcation algorithm is to solve the Ising problem through iterative update.

For example, an iteration process may satisfy the following formula:

$$ y_i\left(t_{k+1}\right) = y_i\left(t_k\right) + \left\{ -\left[a_0 - a\left(t_k\right)\right] x_i\left(t_k\right) + c_0 \sum_{j=1}^{N} J_{i,j} x_j\left(t_k\right) \right\} \Delta t $$

$$ x_i\left(t_{k+1}\right) = x_i\left(t_k\right) + a_0 y_i\left(t_{k+1}\right) \Delta t $$

$a_0$ and $c_0$ are constants, and $a_0$ and $c_0$ are positive numbers. $\Delta t$ indicates a time step, and $\Delta t$ is a positive number. $t_k$ indicates discrete time, $t_0 = 0$, and $t_{k+1} = t_k + \Delta t$. k is a quantity of iterations, and k is a non-negative integer. $a(t_k)$ indicates a control parameter at the moment $t_k$.

For example, $x_i$ and $y_i$ are initialized to random numbers near 0, and then $x_i$ and $y_i$ are iteratively updated according to the foregoing formula. After $x_i$ is iteratively updated, whether an absolute value $|x_i|$ of $x_i$ is greater than 1 is determined. If $|x_i| > 1$, a value of current $x_i$ is replaced with sgn($x_i$), and a value of current $y_i$ is set to 0. In other words, if $|x_i| > 1$, $x_i$ = sgn($x_i$), and $y_i = 0$.

According to the foregoing iteration process, values of the N variables $x_i$ may be obtained, and corresponding $s_i$ may be obtained by performing a symbol operation on $x_i$, that is, $s_i$ = sgn($x_i$), so that a solution of the Ising problem is obtained.

It should be understood that the foregoing is merely an example form of the simulated bifurcation algorithm, and the simulated bifurcation algorithm may alternatively implement an iteration according to another formula.

Data distribution means that in a distributed storage scenario, data is properly distributed to improve execution efficiency. When a distributed task is executed, data used in the task may be stored in different devices, and the data used in the task generally needs to be aggregated into one device. Migrating data from one device to another device incurs migration costs.

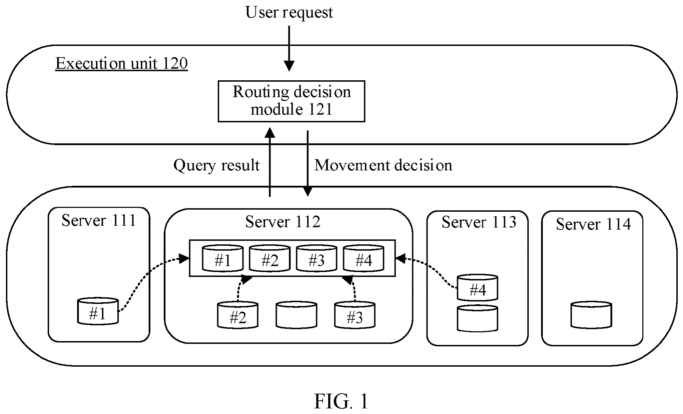

FIG. 1 is a schematic flowchart of a process of executing a query task.

For example, FIG. 1 shows four servers (severs), namely, a server 111, a server 112, a server 113, and a server 114. Data is stored in the four servers shown in FIG. 1.

After an execution unit 120 receives a user request, a routing decision module 121 may determine, based on the user request, a migration manner of data that needs to be used in a query task corresponding to the request. A movement decision indicates the migration manner of the data. As shown in FIG. 1, the data that needs to be used in the query task includes data #1, data #2, data #3, and data #4. The data #1 is stored in the server 111, the data #2 and the data #3 are stored in the server 112, and the data #4 is stored in the server 113. Based on the movement decision, the data #1 in the server 110 is migrated to the server 112, and the data #4 in the server 113 is migrated to the server 112. The data #2 and the data #3 do not need to be migrated. After a query is completed, a query result is sent to the user.

In this query, both the data #1 and the data #4 need to be migrated to the server 112, and there are two parts of migration costs. If the data #1, the data #2, the data #3, and the data #4 are stored in a same server, data migration does not exist in this query, so that task execution efficiency can be improved.

It can be learned from FIG. 1 that an improper data storage manner causes an increase in an amount of data that needs to be migrated or a quantity of migrations in a process of executing a task, resulting in an increase in migration costs.

In this case, the task execution efficiency is affected.

In view of this, an embodiment of this application provides a distributed data storage method, intimacy between data is determined based on a log, to optimize a data layout based on the intimacy between the data. This helps allocate a proper storage location to the data, so that data migration costs are reduced, thereby improving running performance.

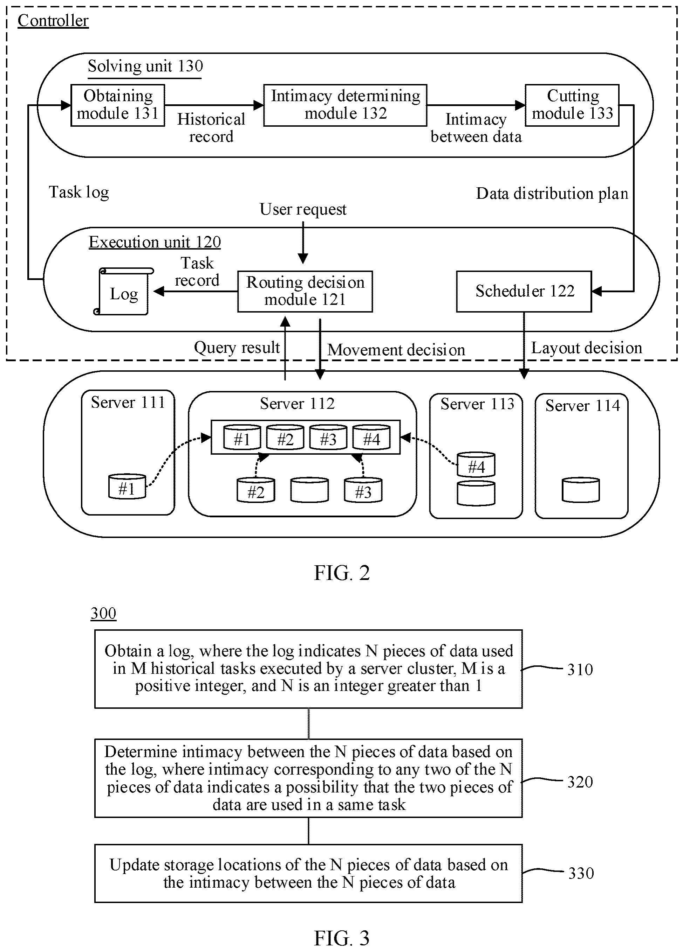

FIG. 2 is a schematic flowchart of a data processing procedure according to an embodiment of this application. A distributed data storage method in this embodiment of this application may be applied to the data processing procedure to determine a data storage location.

For example, after a task is executed, a routing decision module 121 may store an execution status of the task in a task log (log). For example, as shown in FIG. 2, after a query task is executed, the routing decision module 121 may store a query record in the task log.

As shown in FIG. 2, a solving unit 130 includes an obtaining module 131, an intimacy determining module 132, and a cutting module 133.

The obtaining module 131 is configured to obtain the log. The log indicates N pieces of data used in M historical tasks executed by a server cluster. M is a positive integer. N is an integer greater than 1.

For example, as shown in FIG. 2, the obtaining module 131 may obtain a historical record based on the task log. A historical task may be a historical query task.

For example, the obtaining module 131 may load a pipeline of data, to obtain the historical record. The pipeline of the data may be used to copy, from the task log, historical recordrelated data, and process the related data to obtain the historical record.

It should be understood that this is merely an example. The obtaining module 131 may alternatively obtain the historical record in another manner. This is not limited in this embodiment of this application.

The intimacy determining module 132 is configured to determine intimacy between the N pieces of data based on the log.

Optionally, the intimacy determining module 132 may construct, based on the log, a graph structure corresponding to the log. For example, the graph structure may be a first intimacy relationship graph below. Each of N nodes in the first intimacy relationship corresponds to one of the N pieces of data. A weight of an edge in the first intimacy relationship graph indicates the intimacy between the N pieces of data. In this case, the intimacy determining module 132 may also be referred to as a construction module 132.

If a previously constructed graph structure is stored in a system, the construction module 132 may update the graph structure based on the log.

The cutting module 133 is configured to determine target storage locations of the N pieces of data in P servers in the server cluster based on the intimacy between the N pieces of data. P is a positive integer. The storage locations of the N pieces of data in the P servers may also be referred to as servers corresponding to the N pieces of data. A server corresponding to each piece of data is a storage location of the data.

For example, the cutting module 133 may be configured to implement graph cutting processing. Specifically, the cutting module 133 may be configured to divide the first intimacy relationship graph into P subgraphs. Each subgraph corresponds to a server. A target storage location of each piece of data is a server corresponding to a subgraph that is in the first intimacy relationship graph and to which a node corresponding to each piece of data belongs.

Further, the cutting module 133 may feed back a data distribution plan to a scheduler 122. The data distribution plan indicates the target storage location of each piece of data. The scheduler 122 may determine a layout decision based on the data distribution plan, to adjust a data storage location, in other words, adjust data to a target storage location that is of the data and that is determined by the cutting module 133, so that a data layout is optimized.

The scheduler 122 may send scheduling information to a server, where the scheduling information indicates a data migration policy.

For example, if the target storage location that is of the data and that is determined by the cutting module 133 is different from a server in which the data is currently stored, the scheduler 122 may send the scheduling information to the two servers to indicate data migration.

For example, the scheduler 122 may alternatively send the scheduling information to all servers that currently store the N pieces of data and the P servers, to indicate to migrate the N pieces of data to an idle server, and then separately migrate the N pieces of data from the idle server to the target storage location of each piece of data.

It should be understood that the foregoing scheduling process is merely an example, and a specific scheduling process is not limited in this embodiment of this application.

For example, the solving unit 130 may re-execute the foregoing process of determining data distribution at intervals, to update a data storage location.

For specific descriptions of the solving unit 130, refer to the method 300.

It should be understood that locations, quantities, and the like that are of modules, units, servers, and the like in FIG. 2 are merely examples, and does not constitute a limitation on the solution in this embodiment of this application. For example, in the system shown in FIG. 2, the solving unit 130, the execution unit 140, and the servers are separately shown only for ease of description. The following is not limited: The solving unit 130, the execution unit 140, and the servers are disposed on devices that are independent of each other. For example, the solving unit 130 may be deployed in any one or more of the servers shown in FIG. 2, or the solving unit 130 may be deployed in a device other than the servers shown in FIG. 2. For another example, the solving unit 130 and the execution unit 120 may be integrated into a same device, or may be separately deployed on different devices.

FIG. 3 is a schematic flowchart of a distributed data storage method according to an embodiment of this application. The method 300 may be applied to the procedure shown in FIG. 2. The method shown in FIG. 3 may be performed by a controller. The controller may communicate with a plurality of servers in a server cluster. The plurality of servers are configured to perform distributed storage on data. The controller may be any one or more of the plurality of servers, or the controller may be a module deployed in any one or more of the plurality of servers. Alternatively, the controller may be a server other than the plurality of servers. Alternatively, the controller may be a module deployed in a server other than the plurality of servers.

For example, the method 300 may be performed by the solving unit 130 in FIG. 2. The controller may include the solving unit 130. Further, the controller may include an execution unit 120. It should be understood that FIG. 2 is merely an example. In another possible implementation, the execution unit 120 may alternatively be deployed outside the controller.

As shown in FIG. 3, the method 300 includes the following steps.

310: Obtain a log, where the log indicates N pieces of data used in M historical tasks executed by the server cluster, M is a positive integer, and N is an integer greater than 1.

320: Determine intimacy between the N pieces of data based on the log, where intimacy corresponding to any two of the N pieces of data indicates a possibility that the two pieces of data are used in a same task.

330: Update storage locations of the N pieces of data based on the intimacy between the N pieces of data.

In step 330, a target storage location of each piece of data in P servers is determined based on the intimacy between the N pieces of data. P is an integer greater than 1.

For example, when the controller does not include the execution unit 120, step 310 may be performed by the obtaining module 131 in FIG. 2. In other words, the obtaining unit 131 may receive the log from the execution unit 120. When the controller includes the execution unit 120, step 310 may be understood as reading the log.

For example, the M historical tasks may include a plurality of historical tasks, that is, M>1. The plurality of historical tasks may include tasks with the same task content, or may include tasks with different task content.

For example, the task may be a query task. A task is a query.

Alternatively, the task may be another task that needs to access data.

For ease of description, in this embodiment of this application, only the query task is used as an example for description, and does not constitute a limitation on the scope of this embodiment of this application.

The log indicates data used in each of the M historical tasks.

The data used in the task may include data accessed by the task or an identifier of the data accessed by the task, for example, an index of the data.

For example, the log may include data used in the M historical tasks.

For example, the data used in the M historical tasks may be an index of data accessed by the M historical tasks, and the log may include the index of the data accessed by the M historical tasks. In this case, the N pieces of data may be N indexes, and data distribution is a distribution status of the N indexes.

For example, the log may include an identifier of data used in the M historical tasks.

For example, the data used in the M historical tasks may be data accessed by the M historical tasks, and the log may include an index of the data accessed by the M historical tasks. In this case, the N pieces of data may be N pieces of data accessed by a task, and data distribution is a distribution status of the N pieces of data accessed by the task.

For example, a historical record indicated by the log may be indicated in the following form:

$$0\ 5$$

$$1\ 2\ 3$$

$$2\ 3\ 4$$

$$0\ 1\ 5$$

In the historical record, each row indicates a historical query, and each number indicates an index of data. The historical record shows four historical tasks, that is, M=4. Numbers 0 to 5 respectively indicate indexes of six pieces of data. Indexes in a same row are indexes of data accessed in a same historical query. The historical record includes four historical queries. In a 1st historical query, data whose index is 0 and data whose index is 5 are queried and accessed. In a 2nd historical query, data whose index is 1, data whose index is 2, and data whose index is 3 are queried and accessed. The rest may be deduced by analogy.

It should be understood that the foregoing is merely an example, and the historical record may be alternatively indicated in another form, provided that data used in each historical task can be indicated.

For example, step 320 may be performed by the intimacy determining module 132 in FIG. 2.

A possibility that two pieces of data are used in a same task may also be understood as an association between the two pieces of data and the same task.

For ease of description, in this embodiment of this application, that a plurality of pieces of data are used in a same task may also be referred to as that the plurality of pieces of data are simultaneously used. In other words, that the plurality of pieces of data are simultaneously used means that the plurality of pieces of data are used in the same task. The following is not limited: The plurality of pieces of data are used in the same task at a same moment. That a plurality of pieces of data are simultaneously used in the log is that the plurality of pieces of data are used in a same task in the M historical tasks.

Step 320 may also be referred to as log-based intimacy modeling.

For example, intimacy corresponding to two pieces of data may also be referred to as intimacy between the two pieces of data. There may be a positive correlation relationship between the intimacy between the two pieces of data and a possibility that the two pieces of data are used in a same task. In other words, a higher possibility that the two pieces of data are used in the same task indicates higher intimacy between the two pieces of data.

For ease of description, in this embodiment of this application, an example in which there is a positive correlation relationship between intimacy between two pieces of data and a possibility that the two pieces of data are used in a same task is mainly used for description, and does not constitute a limitation on the solution in this embodiment of this application.

For example, the target storage location of each piece of data may be determined by the cutting module 133 in FIG. 2.

For example, in step 330, data that has a high possibility to be used in a same task may be stored in a same server as much as possible based on the intimacy between the N pieces of data.

In this way, a quantity of data migrations during execution of the task can be reduced, thereby reducing migration costs and improving task execution efficiency.

According to the solution in this embodiment of this application, intimacy between data is determined based on the log, and a data layout manner, in other words, a target storage location of the data, is further determined based on the intimacy. This helps reduce communication costs caused by data migration in a process of executing a task, and reduce the migration costs, thereby improving running performance. For example, a plurality of pieces of data that have a high possibility to be used in a same task are stored in a same server as much as possible. In this way, a quantity of data migrations during task execution can be reduced, and the migration costs can be reduced, so that processing efficiency of the task is improved.

Optionally, step 320 may include: determining the intimacy between the N pieces of data based on a quantity of times that the N pieces of data are used in a same historical task in the M historical tasks.

Optionally, the data used in the M historical tasks includes data #11 and data #12, a subset of a set including the M historical tasks includes a first subset and a second subset, an element in the first subset includes all historical tasks in which the data #11 is used and that are in the M historical tasks, an element in the second subset includes all historical tasks in which the data #12 is used and that are in the M historical tasks, and intimacy between the data #11 and the data #12 is based on a quantity of elements in an intersection set of the first subset and the second subset.

An element in the intersection set of the first subset and the second subset includes all historical tasks in which the data #11 and the data #12 are used and that are in the M historical tasks. Data used in each element in the intersection set of the first subset and the second subset includes both the data #11 and the data #12.

The quantity of elements in the intersection set of the first subset and the second subset is a quantity of times that the data #11 and the data #12 are simultaneously used in the log.

In other words, the intimacy between the data #11 and the data #12 is based on the quantity of times that the data #11 and the data #12 are simultaneously used in the log.

The data #11 and the data #12 are any two pieces of data in the data used in the M historical tasks. "First" and "second" in the data #11 and the data #12 are merely used to distinguish between the two pieces of data, and have no other limitation function. Intimacy between any two pieces of data in the data used in the M historical tasks may be determined with reference to a manner of determining the intimacy between the data #11 and the data #12.

For example, intimacy between two pieces of data in the data used in the M historical tasks is based on a quantity of times that the two pieces of data are simultaneously used in the log.

The following uses the foregoing example of the historical record as an example for description.

For example, the data #11 may be the data whose index is 0, and the data #12 may be the data whose index is 1. The data whose index is 0 is accessed by the 1st historical query and a 4th historical query, and the element in the first subset includes the 1st historical query and the 4th historical query. The data whose index is 1 is accessed by the 2nd historical query and the 4th historical query, and the element in the second subset includes the 2nd historical query and the 4th historical query. The element in the intersection set of the first subset and the second subset is the 4th historical query.

The quantity of elements in the intersection set of the first subset and the second subset is 1. In the historical record, a quantity of times that the data whose index is 0 and the data whose index is 1 are simultaneously used is 1.

For another example, the data #11 may be the data whose index is 0, and the second data may be the data whose index is 5. The data whose index is 0 is accessed by the 1st historical query and a 4th historical query, and the element in the first subset includes the 1st historical query and the 4th historical query. The data whose index is 5 is accessed by the 1st historical query and the 4th historical query, and the element in the second subset includes the 1st historical query and the 4th historical query. The element in the intersection set of the first subset and the second subset includes the 1st historical query and the 4th historical query. The quantity of elements in the intersection set of the first subset and the second subset is 2. In the historical record, a quantity of times that the data whose index is 0 and the data whose index is 5 are simultaneously used is 2.

In a possible example, there may be a positive correlation relationship between intimacy between two pieces of data and a quantity of times that the two pieces of data are simultaneously used in the log. In other words, a larger quantity of times that the two pieces of data are simultaneously used in the log indicates higher intimacy between the two pieces of data.

For example, the intimacy between the two pieces of data is the quantity of times that the two pieces of data are simultaneously used in the log.

The foregoing example of the historical record is used as an example. Intimacy between the data whose index is 0 and the data whose index is 5 is 2, and intimacy between the data whose index is 0 and the data whose index is 1 is 1.

Alternatively, the intimacy between the two pieces of data may be obtained by processing the quantity of times that the two pieces of data are simultaneously used in the log.

For example, when the quantity of elements in the intersection set of the first subset and the second subset is less than or equal to a threshold #1, the intimacy between the data #11 and the data #12 is 0.

In other words, if the quantity of times that the two pieces of data are simultaneously used in the log is less than or equal to the threshold #1, the intimacy between the two pieces of data may be set to 0.

For example, the threshold #1 may be determined based on a quantity of times that two pieces of data in the data used in the M historical tasks are simultaneously used.

For example, the threshold #1 may be a smallest value in a quantity of times that any two pieces of data in the data used in the M historical tasks are simultaneously used. In other words, if the quantity of times that the two pieces of data are simultaneously used in the log is less than or equal to a quantity of times that other pieces of data in the data used in the M historical tasks are simultaneously used in the log, the quantity of times that the two pieces of data are simultaneously used in the log may be used as the threshold #1. In other words, intimacy between two pieces of data that are simultaneously used for least times in the log is set to 0.

For example, the threshold #1 may be a preset fixed value.

The threshold #1 may alternatively be determined in another manner. This is not limited in this embodiment of this application.

A quantity of times that two pieces of data in the log are used in a same historical task may be used to reflect intimacy between the two pieces of data, in other words, a possibility that the two pieces of data are read by a same task in the future. If two pieces of data are simultaneously read in the log for a plurality of times, there is a high possibility that the two pieces of data are read by a same task in the future. In this embodiment of this application, intimacy between two pieces of data is determined based on a quantity of times that the two pieces of data in the log are used in a same historical task. This solution is simple and efficient, and helps quickly determine an intimacy relationship, so that processing efficiency is improved. In addition, the intimacy relationship can be updated as the log changes, so that the intimacy relationship can more accurately reflect a current environment, to facilitate subsequent implementation of more proper data distribution.

The intimacy between the two pieces of data may alternatively be determined in another manner. For example, the intimacy between the two pieces of data may be determined in a machine learning manner.

Optionally, step 320 may include: constructing a first intimacy relationship graph based on the log, where each of N nodes in the first intimacy relationship graph corresponds to one of the N pieces of data, and a weight of an edge between two nodes in the first intimacy relationship graph indicates intimacy between two pieces of data corresponding to the two nodes.

The first intimacy relationship graph is a weighted graph. An edge in the weighted graph has a corresponding weight.

In the first intimacy relationship graph, the weight of the edge between the two nodes may be based on a quantity of times that the two pieces of data corresponding to the two nodes are simultaneously used in the log.

For example, in the first intimacy relationship graph, the weight of the edge between the two nodes may be the quantity of times that the two pieces of data corresponding to the two nodes are simultaneously used in the log.

Alternatively, in the first intimacy relationship graph, the weight of the edge between the two nodes may be obtained by processing the quantity of times that the two pieces of data corresponding to the two nodes are simultaneously used in the log.

For example, a graph structure is constructed based on the log, and a quantity of times that two pieces of data are simultaneously used in the log is set to a weight of an edge between two nodes that correspond to the two pieces of data and that are in the graph structure. An edge in the graph structure is processed to obtain the first intimacy relationship graph.

For example, an edge whose weight is less than or equal to a threshold #2 is deleted from the graph structure, to obtain the first intimacy relationship graph.

The threshold #2 may be set as needed.

For example, the threshold #2 may be a smallest value of weights of all edges in the graph structure. In other words, an edge with a smallest weight is deleted from the graph structure, to obtain the first intimacy relationship graph.

It should be understood that the foregoing is merely an example, and the weight of the edge between the two nodes may alternatively be determined in another manner. This is not limited in this embodiment of this application.

For example, in the first intimacy relationship graph, a weight of an edge between two nodes may be intimacy between two pieces of data corresponding to the two nodes.

In this embodiment of this application, the first intimacy relationship graph may be constructed based on the log, and an intimacy relationship between different pieces of data is indicated in a form of a weighted graph. A graph construction solution is simple and effective, and helps improve the processing efficiency.

Optionally, constructing the first intimacy relationship graph based on the log may be implemented by using the following steps.

S1: Construct a second intimacy relationship graph based on the log, where each of N nodes in the second intimacy relationship graph corresponds to one of the N pieces of data, and in a process of constructing the second intimacy relationship graph, one edge is separately connected between nodes corresponding to data used in an $m^{th}$ historical task in the M historical tasks, where m=1, 2, ..., M.

In other words, for each historical task, a full-mesh graph is constructed based on data used in the historical task. Each node in the full-mesh graph corresponds to one piece of data used in the historical task. The data used in each historical task corresponds to one full-mesh subgraph in the second intimacy relationship graph. In the second intimacy relationship graph, a quantity of edges between two nodes is a quantity of times that two pieces of data corresponding to the two nodes are simultaneously used in the log.

For example, data used in a historical task is data #1, data #2, and data #3, and one edge is separately constructed between nodes corresponding to the data #1, the data #2, and the data #3. By analogy, the second intimacy relationship graph may be obtained until data used in all historical tasks is indicated in a graph.

For two pieces of data, each time the two pieces of data are simultaneously used in the log, an edge is constructed between nodes corresponding to the two pieces of data. In this way, a quantity of times that pieces of data corresponding to nodes are simultaneously used in the log may be determined based on a quantity of edges between nodes in the second intimacy relationship graph.

S2: Determine the first intimacy relationship graph based on the second intimacy relationship graph, where each of the N nodes in the second intimacy relationship graph corresponds to one node in the first intimacy relationship graph, and a weight of an edge between two nodes in the first intimacy relationship graph is based on a quantity of edges between two corresponding nodes in the second intimacy relationship graph.

For example, a weight of an edge between two of a plurality of nodes in the first intimacy relationship graph may be in a positive correlation relationship with a quantity of edges between two corresponding nodes in the second intimacy relationship graph.

For example, the weight of the edge between the two of the plurality of nodes in the first intimacy relationship graph may be the quantity of edges between the two corresponding nodes in the second intimacy relationship graph.

In the second intimacy relationship graph, if a quantity of edges between two nodes is greater than 1, the edges between the two nodes are combined into one edge, and a weight of the edge is the quantity of edges between the two nodes before the combination. For example, in the second intimacy relationship graph, if the quantity of edges between the two nodes is 2, the two nodes are combined into one edge whose weight is 2. After the foregoing operations are performed on all edges in the second intimacy relationship graph, a graph structure is obtained.

The graph structure may be used as the first intimacy relationship graph. In this case, the weight of the edge between the two of the plurality of nodes in the first intimacy relationship graph is the quantity of edges between the two corresponding nodes in the second intimacy relationship graph.

Alternatively, an edge in the graph structure may be processed to obtain the first intimacy relationship graph. For specific descriptions, refer to the foregoing descriptions. To avoid repetition, details are not described herein again.

According to the solution in this embodiment of this application, an edge is constructed between two nodes to indicate that data corresponding to the two nodes is used in a same historical task in the log, so that the intimacy between the N pieces of data is further obtained. In this manner, fast modeling can be implemented, in other words, a speed of determining the intimacy is improved. In addition, in the process of constructing the second intimacy relationship graph, a quantity of edges between nodes varies with data used in different historical tasks in the log. This helps ensure authenticity of intimacy between data.

An intimacy relationship between data may be indicated in a plurality of graph language indication manners.

Optionally, the first intimacy relationship graph may be represented by a matrix. The matrix includes N rows and N columns, each of the N rows corresponds to one node in the first intimacy relationship graph, and each of the N columns corresponds to one node in the first intimacy relationship graph. Each element in the matrix indicates a weight of an edge between a node corresponding to a row in which the element is located and a node corresponding to a column in which the element is located.

In other words, an intimacy relationship between data is indicated by using a sparse matrix.

For example, a number of a node in the first intimacy relationship graph is the same as a number of a row of a matrix corresponding to the node. The number of the node in the first intimacy relationship graph is the same as a number of the matrix corresponding to the node. An element in an $a^{th}$ row and a $b^{th}$ column of a matrix is a weight of an edge between an $a^{th}$ node and a $b^{th}$ node. Correspondingly, an element in a $b^{th}$ row and an $a^{th}$ column of the matrix is also a weight of an edge between the $a^{th}$ node and the $b^{th}$ node. a is an integer less than N. b is an integer less than N.

It should be noted that the first intimacy relationship graph may alternatively be indicated in another graph language indication manner, for example, indicated by a dictionary or a list. This is not limited in this embodiment of this application.

Optionally, step 330 may include: based on the storage locations of the N pieces of data and a first storage solution. The first storage solution indicates target storage locations of the N pieces of data in the P servers. A statistical value of intimacy between the P servers in the first storage solution is less than or equal to a first threshold. Intimacy between two of the P servers in the first storage solution is based on intimacy between data corresponding to one of the two servers and data corresponding to the other server.

That the first storage solution indicates the target storage locations of the N pieces of data in the P servers may also be understood as that the first storage solution indicates a target correspondence between the N pieces of data and the P servers. In the storage solution, data corresponding to a server may be understood as data that is in the N pieces of data, that is indicated by the storage solution, and that is stored in the server, and is not intended to limit an actual storage location of the data.

The first storage solution may be used as the data distribution plan in FIG. 2.

Optionally, the first storage solution is an element in a set including a plurality of storage solutions, and each of the plurality of storage solutions indicates a type of different storage location of the N pieces of data in the P servers. In other words, each storage solution indicates a different correspondence between the N pieces of data and the P servers.

Step 330 may include: determining the first storage solution from the plurality of storage solutions based on the intimacy between the N pieces of data.

Each of the plurality of storage solutions indicates one correspondence, that is, indicates a type of storage location of the N pieces of data in the P servers. Different storage solutions indicate different correspondences. The correspondence is a correspondence between the N pieces of data and the P servers.

The plurality of storage solutions may also be understood as a plurality of combination manners of the N pieces of data and P nodes.

For example, the P servers include a server #1 and a server #2. The N pieces of data include data 1#, data 2#, and data 3#. The plurality of storage solutions include a storage solution #1 and a storage solution #2. The storage solution #1 and the storage solution #2 respectively indicate two correspondences. Specifically, in the storage solution #1, the data #1 and the data #2 correspond to the server #1, and the data #3 corresponds to the server #2. In the storage solution #2, the data #1 corresponds to the server #1, and the data #2 and the data #3 correspond to the server #2.

The following uses one of the plurality of storage solutions as an example for description.

For a storage solution, the statistical value of the intimacy between the P servers may be understood as a statistical value of intimacy between every two of the P servers.

For example, if each of two servers corresponds to one piece of data, intimacy between the two servers may be intimacy between data corresponding to one of the two servers and data corresponding to the other server.

For example, if at least one of two servers corresponds to a plurality of pieces of data, intimacy between the two servers may be a sum of intimacy between data corresponding to one of the two servers and data corresponding to the other server.

For example, when P>2, the statistical value of the intimacy between the P servers may be an average value, a sum, or the like of the intimacy between the P servers. When P=2, the statistical value of the intimacy between the P servers may be the intimacy between the two servers.

For example, the P servers include a server #1 and a server #2. The N pieces of data include data 1#, data 2#, and data 3#. The data #1 and the data #2 correspond to the server #1, and the data #3 corresponds to the server #2. Intimacy between the two servers may be a sum of intimacy between data corresponding to the server #1 and data corresponding to the server #2, in other words, a sum of intimacy between the data #1 and the data #3 and intimacy between the data #2 and the data #3.

For another example, the P servers include a server #1, a server #2, and a server #3. The N pieces of data include data #1, data #2, data #3, and data #4. The data #1 and the data #2 correspond to the server #1, the data #3 corresponds to the server #2, and the data #4 corresponds to the server #3. A sum of intimacy between the three servers is a sum of intimacy between the server #1 and the server #2, intimacy between the server #1 and the server #3, and intimacy between the server #2 and the server #3. The intimacy between the server #1 and the server #2 is a sum of intimacy between the data #1 and the data #3 and intimacy between the data #2 and the data #3. The intimacy between the server #1 and the server #3 is a sum of intimacy between the data #1 and the data #4 and intimacy between the data #2 and the data #4. The intimacy between the server #2 and the server #3 is intimacy between the data #3 and the data #4.

For example, the first threshold may be a manually specified value.

Optionally, the first threshold may be a smallest value of statistical values of intimacy between the P servers in storage solutions other than the first storage solution in the plurality of storage solutions.

In other words, step 330 may be determining the first storage solution from the plurality of storage solutions, where the statistical value of the intimacy between the P servers in the first storage solution is less than or equal to the statistical values of the intimacy between the P servers in the other storage solutions.

Optionally, step 330 may include: determining the target storage location of each piece of data with an objective of making quantities of pieces of data stored in the P servers the same and the statistical value of the intimacy between the P servers the smallest.

In other words, the first storage solution is determined with the objective of making the quantities of pieces of data stored in the P servers the same and the statistical value of the intimacy between the P servers the smallest.

In other words, data distribution of the P servers is determined based on the intimacy between the N pieces of data, so that a data distribution result is as close as possible to the objective of making the quantities of pieces of data corresponding to the P servers the same and the statistical value of the intimacy between the P servers the smallest.

A problem of solving the objective may be regarded as a combination optimization problem. The combination optimization problem is a problem of obtaining an optimal value (maximum or minimum value) of an objective function under a given constraint.

Step 330 may alternatively be understood in the following manner. There is an optimal solution, in other words, an optimal storage solution in all storage solutions. In the optimal storage solution, quantities of data corresponding to the P servers are the same, and a statistical value of intimacy between the P servers in the optimal storage solution is a smallest value of statistical values of intimacy between the P servers in all the storage solutions. In step 330, the optimal solution is searched for, in other words, a storage solution that is as close as possible to the optimal solution, that is, the first storage solution, is obtained.

In this embodiment of this application, the target storage locations of the N pieces of data are determined with an objective of making the quantities of pieces of data stored in the P servers the same. This helps ensure load balancing on each server and implement balanced storage. The target storage locations of the N pieces of data are determined with an objective of making the intimacy between the P servers the smallest. This helps ensure that data with high intimacy is stored in a same server, to reduce the data migration costs during the task execution, so that the task execution efficiency is improved. In other words, the solution in this embodiment of this application helps reduce the data migration costs during the task execution while ensuring the balanced storage, so that the task execution efficiency is improved.

The foregoing combination optimization problem may be converted into a minimum balanced cut (cut) problem in graph cutting. The smallest balanced cut problem means that an undirected graph is cut into P subgraphs, and the following requirements are met: quantities of nodes in the P subgraphs are balanced, and a quantity of edges between the P subgraphs is the smallest. In other words, the smallest balanced cut problem has two limitations: balance and a cut ratio.

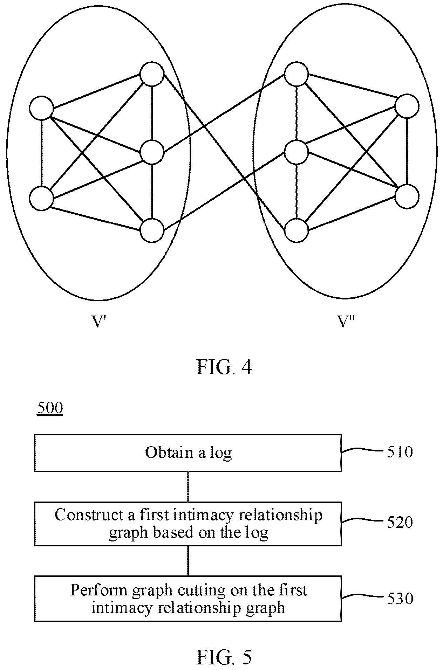

FIG. 4 is a diagram of a minimum balanced cut problem. As shown in FIG. 4, P=2, and an undirected graph is cut into two subgraphs V' and V'', so that quantities of nodes in the two subgraphs are balanced, and a quantity of edges between the two subgraphs is the smallest. The quantity of edges between the two subgraphs in FIG. 4 is 3.

Optionally, the P servers respectively correspond to P subgraphs of the first intimacy relationship graph, and step 330 may include: dividing the first intimacy relationship graph into the P subgraphs with an objective of making quantities of nodes in the P subgraphs the same and a statistical value of a weight of an edge between the P subgraphs the smallest. The target storage location of each piece of data is a server corresponding to a subgraph that is in the P subgraphs and to which a node corresponding to each piece of data belongs.

The first intimacy relationship graph may be divided into the P subgraphs in a plurality of manners. For each division manner, a statistical value of a weight of an edge between the P subgraphs may be understood as a statistical value of a weight of an edge between every two of the P subgraphs.

For example, if each of two of the P subgraphs of the first intimacy relationship graph includes only one node, a weight of an edge between the two subgraphs is based on a weight of an edge between a node in one of the two subgraphs and a node in the other subgraph.

For example, if at least one of two of the P subgraphs of the first intimacy relationship graph includes a plurality of nodes, a weight of an edge between the two subgraphs is based on a sum of weights of edges between nodes in one of the two subgraphs and nodes in the other subgraph, that is, a sum of weights of edges connecting the two subgraphs.

For example, when P>2, the statistical value of the weight of the edge between the P subgraphs may be an average value, a sum, or the like of weights of edges between the P subgraphs. When P=2, the statistical value of the weight of the edge between the P subgraphs may be the weight of the edge between the two subgraphs.

There is an optimal solution, in other words, an optimal division manner, in all division manners of the first intimacy relationship graph. Quantities of nodes in the P subgraphs in the optimal division manner are the same, and a statistical value of a weight of an edge between the P subgraphs in the optimal division manner is a smallest value of statistical values of weights of edges between the P subgraphs in all the division manners. In step 330, the optimal solution is searched for, in other words, a division manner as close as possible to the optimal solution is obtained.

Optionally, the P servers respectively correspond to P subgraphs of the second intimacy relationship graph, and step 330 may include: dividing the second intimacy relationship graph into the P subgraphs with an objective of making quantities of nodes in the P subgraphs the same and a statistical value of a quantity of edges between the P subgraphs the smallest. The target storage location of each piece of data is a server corresponding to a subgraph that is in the P subgraphs and to which a node corresponding to each piece of data belongs.

The second intimacy relationship graph may be divided into the P subgraphs in a plurality of manners. For each division manner, the statistical value of the quantity of edges between the P subgraphs may be understood as a statistical value of a quantity of edges between every two of the P subgraphs.

For example, if each of two of the P subgraphs of the second intimacy relationship graph includes only one node, a quantity of edges between the two subgraphs is based on a quantity of edges between two nodes.

For example, if at least one of two of the P subgraphs of the second intimacy relationship graph includes a plurality of nodes, a quantity of edges between the two subgraphs is based on a sum of quantities of edges between nodes in one of the two subgraphs and nodes in the other subgraph, that is, a sum of quantities of edges connecting the two subgraphs.

For example, when P>2, the statistical value of the quantity of edges between the P subgraphs may be an average value, a sum, or the like of quantities of edges between the P subgraphs. When P=2, the statistical value of the quantity of edges between the P subgraphs may be the quantity of edges between the two subgraphs.

There is an optimal solution, in other words, an optimal division manner, in all division manners of the second intimacy relationship graph. Quantities of nodes in the P subgraphs in the optimal division manner are the same, and a statistical value of a quantity of edges between the P subgraphs in the optimal division manner is a smallest value of statistical values of quantities of edges between the P subgraphs in all the division manners. In step 330, the optimal solution is searched for, in other words, a division manner as close as possible to the optimal solution is obtained.

In this way, the foregoing combination optimization problem may be converted into a minimum balanced cut problem in graph cutting. The foregoing cutting manner makes problem solving more accurate.

As described above, in the first intimacy relationship graph, a weight of an edge may be used for intimacy between nodes. Correspondingly, the weight of the edge between the P subgraphs of the first intimacy relationship graph may indicate the intimacy between the P servers. A weight of an edge between two of the P subgraphs of the first intimacy relationship graph may indicate intimacy between two of the P servers. In the second intimacy relationship graph, a quantity of edges may be used for intimacy between nodes. Correspondingly, a quantity of edges between the P subgraphs of the second intimacy relationship graph may indicate the intimacy between the P servers. A quantity of edges between two of the P subgraphs of the second intimacy relationship graph may indicate intimacy between two of the P servers. For ease of description, in this embodiment of this application, the first intimacy relationship graph is mainly used as an example for description, and does not constitute a limitation on the solution in this embodiment of this application.

In this embodiment of this application, data distribution may be determined in a graph cutting manner, in other words, a data distribution problem is planned as a graph cutting problem. In this way, the data distribution may be determined by using a graph cutting solving method. This improves solving efficiency. Specifically, graph cutting is performed with an objective of making quantities of nodes in subgraphs the same and a weight of an edge between different subgraphs the smallest, and the P subgraphs respectively correspond to the P servers. Graph cutting is performed with an objective of making the quantities of nodes in the subgraphs the same. This helps ensure load balancing on each server and implement balanced storage. Graph cutting is performed with an objective of making the weight of the edge between different subgraphs the smallest. This helps ensure that data with high intimacy is stored in a same server, to reduce the data migration costs during the task execution, so that the task execution efficiency is improved.

The smallest balanced cut problem may be regarded as an Ising problem, in other words, a graph structure may be encoded into an Ising model, so that a solution is made by using a solving manner of the Ising problem.

Each node in the graph structure may correspond to a spin in the Ising model. An up spin or a down spin is respectively indicated as 1 and -1. Nodes with a same spin can be allocated to a same group, that is, a same subgraph.

For example, each node in the first intimacy relationship graph corresponds to one spin in the Ising model, and nodes corresponding to a same spin belong to a same subgraph in the P subgraphs of the first intimacy relationship graph.

For ease of description, in this embodiment of this application, P=2 is mainly used as an example for description.

For example, a cut value $C(s)$ between two groups, in other words, a sum of weights of edges connecting nodes in different subgraphs, may satisfy the following formula:

$$C(s) = \frac{1}{2}\sum_{i=1}^{N}\sum_{j=1}^{N} w_{i,j} \frac{1-s_i s_j}{2} = \frac{1}{4}\sum_{i=1}^{N}\sum_{j=1}^{N} w_{i,j} - \frac{1}{4}\sum_{i=1}^{N}\sum_{j=1}^{N} w_{i,j} s_i s_j$$

s indicates a spin variable. $s_i$ is an $i^{th}$ spin variable in N spin variables, and $s_j$ is a $j^{th}$ spin variable in the N spin variables. The N spin variables respectively correspond to the N pieces of data, in other words, the N spin variables respectively correspond to the N nodes in the first intimacy relationship graph. A value of the spin variable is 1 or -1. Data corresponding to spin variables with a same value belongs to a same subgraph. $w_{i,j}$ indicates a weight of an edge between an $i^{th}$ node and a $j^{th}$ node in the N nodes. Alternatively, $w_{i,j}$ indicates intimacy between an $i^{th}$ piece of data and a $j^{th}$ piece of data in the N pieces of data. The $i^{th}$ node corresponds to the $i^{th}$ piece of data. The $j^{th}$ node corresponds to the $j^{th}$ piece of data.

As described above, the first intimacy relationship graph is divided into the P subgraphs with the objective of making the quantities of nodes in the P subgraphs of the first intimacy relationship graph the same and the statistical value of the weight of the edge between the P subgraphs the smallest, that is, graph cutting is performed under two limitations: balance and a cutting ratio. For example, the objective function may satisfy the following formula:

$$\min\left[\alpha C(s) + \beta\left(\sum_{i=1}^{N} s_i\right)^2\right]$$

$$= \min\left[\frac{1}{4}\alpha\sum_{i=1}^{N}\sum_{j=1}^{N} w_{i,j} - \frac{1}{4}\alpha\sum_{i=1}^{N}\sum_{j=1}^{N} w_{i,j}s_i s_j + \beta\left(\sum_{i=1}^{N} s_i\right)^2\right]$$

$$= \min\left[\frac{1}{4}\alpha\sum_{i=1}^{N}\sum_{j=1}^{N} w_{i,j} - \frac{1}{4}\alpha\sum_{i=1}^{N}\sum_{j=1}^{N} w_{i,j}s_i s_j + \beta\sum_{i=1}^{N}\sum_{j=1}^{N} s_i s_j\right]$$

$\alpha$ and $\beta$ are respectively coefficients corresponding to the two limitations. A first term in the foregoing formula is a constant term. Therefore, the foregoing objective function may be indicated as the following formula:

$$\min\left[-\frac{1}{4}\alpha\sum_{i=1}^{N}\sum_{j=1}^{N} w_{i,j}s_i s_j + \beta\sum_{i=1}^{N}\sum_{j=1}^{N} s_i s_j\right]$$

$$= \min\left[\sum_{i=1}^{N}\sum_{j=1}^{N}\left(\beta - \frac{1}{4}\alpha w_{i,j}\right)s_i s_j\right]$$

$$= \min\left[-\frac{1}{2}\sum_{i=1}^{N}\sum_{j=1}^{N} J_{i,j}s_i s_j\right]$$

$J_{i,j}$ indicates a relationship between the $i^{th}$ node and the $j^{th}$ node in the first intimacy relationship graph. $J_{i,j}$ is determined based on the weight of the edge between the $i^{th}$ node and the $j^{th}$ node. In other words, $J_{i,j}$ indicates a relationship between the $i^{th}$ piece of data and the $j^{th}$ piece of data. $J_{i,j}$ is determined based on the intimacy between the $i^{th}$ piece of data and the $j^{th}$ piece of data. For example, $J_{i,j}$ may satisfy the following formula:

$$J_{i,j} = \frac{1}{2}\alpha w_{i,j} - 2\beta$$

It can be learned from the foregoing formula that a graph cutting problem can be converted into an Ising problem.

It should be understood that the foregoing formula is merely an example, and does not constitute a limitation on the solution in this embodiment of this application. An indication form of the objective function may be set as needed.

As described above, the first intimacy relationship graph may be represented as a matrix, and an element in the matrix is a weight of an edge in the first intimacy relationship graph. In this way, during the graph cutting, calculation may be performed based on the matrix. This helps improve a solving speed.

Optionally, step 330 may be implemented by using a quantum heuristic algorithm. For example, the quantum heuristic algorithm includes a SimCIM, an SBM, LQA, or the like.

The following uses the SBM as an example for description.

The SBM solves the Ising problem by iteratively updating a current result.

For example, an iteration process may satisfy the following formula:

$$y_i(t_{k+1}) = y_i(t_k) + \left\{ -\left[a_0 - a(t_k)\right] x_i(t_k) + c_0 \sum_{j=1}^{N} J_{i,j} x_j(t_k) \right\} \Delta t$$

$$x_i(t_{k+1}) = x_i(t_k) + a_0 y_i(t_{k+1}) \Delta t$$

A variable $x_i$ and a variable $y_i$ correspond to $s_i$, and i=1, 2, ..., N. $a_0$ and $c_0$ are constants, and $a_0$ and $c_0$ are positive numbers. $\Delta t$ indicates a time step, and $\Delta t$ is a positive number. $t_k$ indicates discrete time, $t_0 = 0$, and $t_{k+1} = t_k + \Delta t$. k is a quantity of iterations, and k is a non-negative integer. $a(t_k)$ indicates a control parameter at the moment $t_k$.

For example, $x_i$ and $y_i$ are initialized to random numbers near 0, and then $x_i$ and $y_i$ are iteratively updated according to the foregoing formula. After $x_i$ is iteratively updated, whether an absolute value $|x_i|$ of $x_i$ is greater than 1 is determined. If $|x_i| > 1$, a value of current $x_i$ is replaced with sgn($x_i$), and a value of current $y_i$ is set to 0. In other words, if $|x_i| > 1$, $x_i$ = sgn($x_i$), and $y_i$ = 0.

According to the foregoing iteration process, values of N variables $x_i$ may be obtained, and corresponding $s_i$ may be obtained by performing a symbol operation on $x_i$, that is, $s_i$ = sgn($x_i$). s whose value is 1 belongs to a subgraph, and s whose value is -1 belongs to another subgraph.

According to the solution in this embodiment of this application, the graph cutting may be implemented by using the quantum heuristic algorithm, and solving may be implemented in an iterative update manner. This helps improve the solving speed.

It should be understood that the foregoing is merely an example, and the graph cutting may alternatively be implemented in another manner. This is not limited in this embodiment of this application.

In step 330, the controller may send scheduling information to a server in the server cluster, to indicate the server to update a storage location of data.

For example, the scheduling information may be sent by the scheduler 122 in FIG. 2. For example, the cutting module in FIG. 2 determines the target storage locations of the N pieces of data, and notifies the scheduler 122. The scheduler 122 may send the scheduling information based on the target storage locations of the N pieces of data.

For example, the target storage locations of the N pieces of data may be indicated by the first storage solution. In other words, the scheduling information is determined based on the first storage solution.

For example, the controller may send the scheduling information for data that is in the N pieces of data and whose target storage location is different from a current storage location, to indicate that this part of data is migrated from the current storage location to the target storage location.

Optionally, step 330 may include: sending the scheduling information to a first server in the server cluster and a second server in the server cluster based on the intimacy between the N pieces of data. The scheduling information indicates to migrate, to the second server, first data that is stored in the first server and that is in the N pieces of data.

For example, the target storage locations of the N pieces of data may be indicated by the first storage solution. The first data is stored in the first server, the first storage solution indicates that a target storage location of the first data is the second server, and the controller may send the scheduling information to the first server and the second server, to indicate to migrate the first data from the first server to the second server.

For example, the controller may send the scheduling information for the N pieces of data, to indicate that the N pieces of data are migrated from current storage locations to the target storage locations.

For example, the controller may send the scheduling information to the current storage locations and the target storage locations (that is, the P servers) of the N pieces of data, migrate the N pieces of data from the current storage locations to an idle server, and then migrate the N pieces of data from the idle memory to the target storage locations of the N pieces of data. For example, the idle server neither belongs to the current storage locations of the N pieces of data nor belongs to the P servers.

It should be understood that the foregoing is merely an example, and a specific implementation of a scheduling process is not limited in this embodiment of this application.

In the solution in this embodiment of this application, step 310 to step 330 may be repeatedly performed. In other words, the log may be re-obtained at intervals, intimacy between data is calculated, data distribution is further re-determined, and a data storage location is updated based on a new data distribution plan.

Step 310 to step 330 may be triggered and executed in a plurality of manners.

For example, step 310 to step 330 are periodically performed. An execution periodicity may be set as needed.

For example, the method 300 further includes: obtaining a first task request of a user, executing a first task in response to the first task request, and performing step 310 to step 330 when migration costs in a process of executing the first task are greater than or equal to a threshold #3.

In other words, when migration costs of a task are extremely high, step 310 to step 330 may be performed.

For example, when migration costs of a task whose migration costs are greater than or equal to a threshold #4 in a process of executing the task in a first time period is greater than or equal to a threshold #5, step 310 to step 330 are performed.

In other words, within a period of time, if there are a large quantity of tasks with high migration costs, step 310 to step 330 may be performed.

It should be understood that the foregoing is merely an example, and step 310 to step 330 may alternatively be triggered in another manner. This is not limited in this embodiment of this application.

FIG. 5 is a schematic flowchart of another distributed data storage method according to an embodiment of this application. The method 500 shown in FIG. 5 may be considered as a specific implementation of the foregoing method 300. For related descriptions, refer to the method 300. To avoid repetition, some descriptions are properly omitted when the method 500 is described.

As shown in FIG. 5, the method 500 includes the following steps.

510: Obtain a log, where the log indicates N pieces of data used in M historical tasks, M is a positive integer, and N is a positive integer.

520: Construct a first intimacy relationship graph based on the log.

For example, step 520 may be implemented by using step 521 and step 522 (not shown in FIG. 5).

521: Construct a second intimacy relationship graph based on the log, where each of N nodes in the second intimacy relationship graph corresponds to one of the N pieces of data, and in a process of constructing the second intimacy relationship graph, one edge is separately connected between nodes corresponding to data used in an $m^{th}$ historical task in the M historical tasks, where m=1, 2, ..., M.

522: Determine the first intimacy relationship graph based on the second intimacy relationship graph. Each of the N nodes in the second intimacy relationship graph corresponds to one node in the first intimacy relationship graph, and a weight of an edge between two nodes in the first intimacy relationship graph is based on a quantity of edges between two corresponding nodes in the second intimacy relationship graph.

The following uses the foregoing log as an example to describe step 521 and step 522.

For example, a historical record indicated by the log includes:

$$0\ 5$$

$$1\ 2\ 3$$

$$2\ 3\ 4$$

$$0\ 1\ 5$$

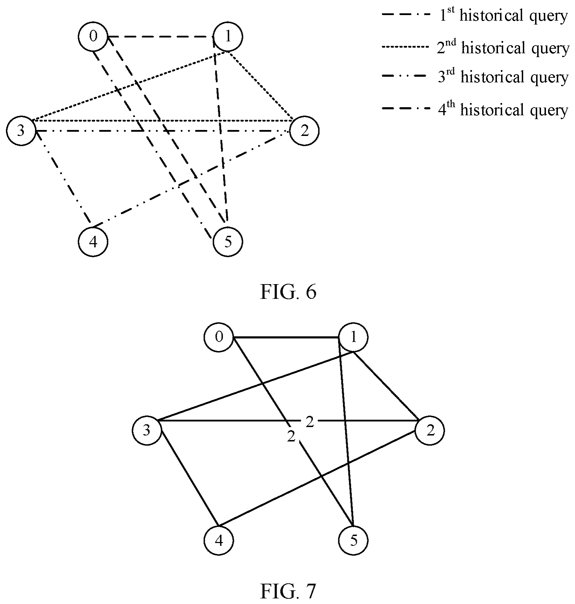

The N pieces of data may be N pieces of data accessed by tasks, and the historical record indicates data accessed by the M historical tasks. The historical record in the foregoing example may be considered as four groups of indexes, in other words, indexes of data accessed by four historical tasks, and respectively indicate the data accessed by the four historical tasks. FIG. 6 is a diagram of a second intimacy relationship graph constructed based on the foregoing log. In the second intimacy relationship graph, a number of a node is the same as an index of data corresponding to the node. The second intimacy relationship graph shown in FIG. 6 may be obtained in the following manner:

Data accessed in a $1^{st}$ historical query includes data whose index is 0 and data whose index is 5. In the second intimacy relationship graph, an edge is constructed between a node corresponding to the data whose index is 0 and a node corresponding to the data whose index is 5.

Data accessed in a $2^{nd}$ historical query includes data whose index is 1, data whose index is 2, and data whose index is 3, and an edge is constructed between every two nodes in three nodes corresponding to the three pieces of data.

By analogy, until processing on data accessed in all historical queries ends, the second intimacy relationship graph shown in FIG. 6 is obtained.

FIG. 7 is a diagram of a first intimacy relationship graph constructed based on the foregoing log. The first intimacy relationship graph shown in FIG. 7 may be obtained in the following manner:

In the second intimacy relationship graph, if a quantity of edges between two nodes is greater than 1, edges between the two nodes are combined into one, and a weight of the edge between the two nodes is set to the quantity of edges between the two nodes before the combination. Therefore, the first intimacy relationship graph shown in FIG. 7 may be obtained.

For example, in the second intimacy relationship graph in FIG. 6, a quantity of edges between a node corresponding to the data whose index is 1 and the node corresponding to the data whose index is 0 is 2, and the two edges are combined into one edge whose weight is 2.

Further, the first intimacy relationship graph is represented as a matrix. The matrix includes N rows and N columns, each of the N rows corresponds to one node in the first intimacy relationship graph, and each of the N columns corresponds to one node in the first intimacy relationship graph. Each element in the matrix indicates a weight of an edge between a node corresponding to a row in which the element is located and a node corresponding to a column in which the element is located.

For example, the first intimacy relationship graph shown in FIG. 7 may be represented as the following matrix.

$$\begin{pmatrix} 0 & 1 & 0 & 0 & 0 & 2 \\ 1 & 0 & 1 & 1 & 0 & 1 \\ 0 & 1 & 0 & 2 & 1 & 0 \\ 0 & 1 & 2 & 0 & 1 & 0 \\ 0 & 0 & 1 & 1 & 0 & 0 \\ 2 & 1 & 0 & 0 & 0 & 0 \end{pmatrix}$$

Numbers of the row and the column of the matrix may be 0 to 5, and are the same as numbers of nodes. For example, in the first intimacy relationship graph, if a weight of an edge between a node numbered 0 and a node numbered 5 is 2, an element in a $0^{th}$ row and a $5^{th}$ column in the matrix is 2, and an element in a $5^{th}$ row and a $0^{th}$ column is also 2.

530: Perform graph cutting on the first intimacy relationship graph.

The first intimacy relationship graph is divided into P subgraphs with an objective of making quantities of nodes in the P subgraphs of the first intimacy relationship graph the same and a sum of weights of edges between the P subgraphs the smallest. The P subgraphs respectively correspond to P nodes. A target storage location of each piece of data is a server corresponding to a subgraph that is in the P subgraphs and to which a node corresponding to each piece of data belongs.

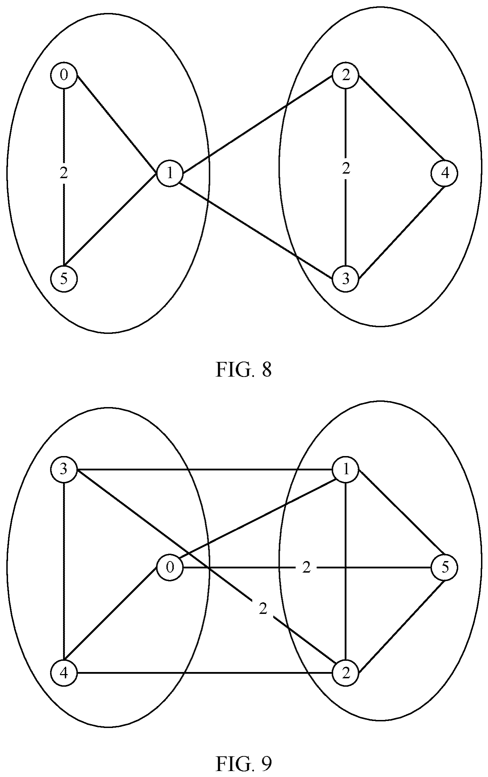

FIG. 8 is a diagram of a subgraph division manner of the first intimacy relationship graph shown in FIG. 7.

As shown in FIG. 8, P=2. There are two edges between the two subgraphs: an edge between a node numbered 1 and a node numbered 2 and an edge between the node numbered 1 and a node numbered 3. A weight of the edge between the two subgraphs is a sum of weights of the two edges.

FIG. 9 is a diagram of another subgraph division manner of the first intimacy relationship graph shown in FIG. 7.

As shown in FIG. 9, P=2.

There are five edges between the two subgraphs: an edge between a node numbered 1 and a node numbered 3, an edge between the node numbered 1 and a node numbered 0, an edge between the node numbered 0 and a node numbered 5, an edge between a node numbered 4 and a node numbered 2, and an edge between the node numbered 2 and a node numbered 3. A statistical value of a weight of the edge between the two subgraphs is a sum of weights of the five edges.

It should be understood that the foregoing two division manners are merely examples, and do not constitute a limitation on the solution in this embodiment of this application.

For a specific manner of graph cutting, refer to the descriptions in the method 300. To avoid repetition, details are not described herein again.

It should be understood that the method 500 shown in FIG. 5 is merely an example, and does not constitute a limitation on the solution in this embodiment of this application.

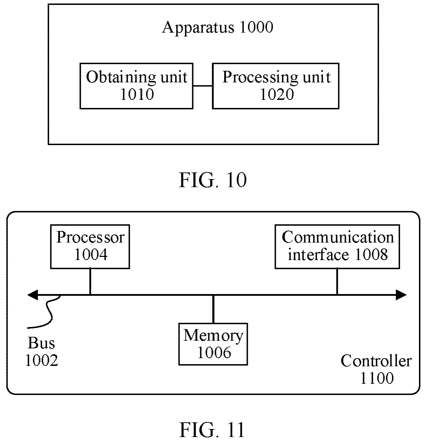

The following describes embodiments of apparatuses in this application with reference to FIG. 10 and FIG. 11. It should be understood that descriptions of the method embodiments correspond to descriptions of the apparatus embodiments. For specific descriptions, refer to the foregoing related descriptions. To avoid unnecessary repetition, repeated descriptions are properly omitted when the apparatus embodiments are described below.

FIG. 10 is a block diagram of a distributed data storage apparatus according to an embodiment of this application. The apparatus 1000 shown in FIG. 10 may be configured to perform a distributed data storage method in embodiments of this application, for example, the method 300 or the method 500.

As shown in FIG. 10, the apparatus 1000 includes an obtaining unit 1010 and a processing unit 1020.

In a possible implementation, the obtaining unit 1010 is configured to perform step 310 or step 510; and the processing unit 1020 is configured to perform step 320 and step 330 or step 520 and step 530.

The term "unit" herein may be implemented in a form of software and/or hardware. This is not specifically limited.

For example, the "unit" may be a software program, a hardware circuit, or a combination thereof that implements the foregoing function. For example, the following uses the processing unit as an example to describe an implementation of the processing unit. Similarly, for implementations of the obtaining unit and an output unit, refer to implementations of the processing unit.

The processing unit is used as an example of a software functional unit, and the processing unit may include code running on a computing instance. The computing instance may include at least one of a physical host (computing device), a virtual machine, and a container. Further, there may be one or more computing instances. For example, the processing unit may include code running on a plurality of hosts/virtual machines/containers. It should be noted that the plurality of hosts/virtual machines/containers used to run the code may be distributed in a same region (region), or may be distributed in different regions. Further, the plurality of hosts/virtual machines/containers used to run the code may be distributed in a same availability zone (availability zone, AZ), or may be distributed in different AZs. Each AZ includes one data center or a plurality of data centers that are geographically close to each other. Generally, one region may include a plurality of AZs.

Similarly, the plurality of hosts/virtual machines/containers used to run the code may be distributed in a same virtual private cloud (virtual private cloud, VPC), or may be distributed in a plurality of VPCs. Generally, one VPC is set in one region. A communication gateway needs to be set in each VPC for communication between two VPCs in a same region or between VPCs in different regions. Interconnection between VPCs is implemented through the communication gateway.

The processing unit is used as an example of a hardware functional unit, and the processing unit may include at least one computing device, for example, a server. Alternatively, the processing unit may be implemented via an application-specific integrated circuit (application-specific integrated circuit, ASIC), a device implemented via a programmable logic device (programmable logic device, PLD), or the like. The PLD may be a complex programmable logical device (complex programmable logical device, CPLD), a field-programmable gate array (field-programmable gate array, FPGA), a generic array logic (generic array logic, GAL), or any combination thereof.

A plurality of computing devices included in the processing unit may be distributed in a same region, or may be distributed in different regions. The plurality of computing devices included in the processing unit may be distributed in a same AZ, or may be distributed in different AZs. Similarly, the plurality of computing devices included in the processing unit may be distributed in a same VPC, or may be distributed in a plurality of VPCs. The plurality of computing devices may be any combination of computing devices such as a server, an ASIC, a PLD, a CPLD, an FPGA, and a GAL.

Therefore, modules in the examples described in embodiments of this application can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It should be noted that, in another embodiment, the processing unit may be configured to perform any step in the distributed data storage method, the obtaining unit may be configured to perform any step in the distributed data storage method, steps that the obtaining unit and the processing unit are responsible for implementing may be specified as needed, and all functions of the apparatus 1000 are implemented by separately implementing different steps in the distributed data storage method via the obtaining unit and the processing unit.

This application further provides a controller 1100. As shown in FIG. 11, the controller 1100 includes a processor 1004 and a communication interface 1008. Further, the controller 1100 may include a bus 1002 and a memory 1006. It should be understood that the bus 1002 and the memory 1006 are optional. The processor 1004, the memory 1006, and the communication interface 1008 communicate with each other through the bus 1002. For example, the controller 1100 may be a computing device or an apparatus that is in the computing device and that is configured to implement the method in embodiments of this application. The controller 1100 may be a server or a terminal device. It should be understood that quantities of processors and memories in the controller 1000 are not limited in this application.

The bus 1002 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of indication, the bus is indicated by using only one line in FIG. 11. However, this does not indicate that there is only one bus or only one type of bus. The bus 1004 may include a path for information transfer between various components (for example, the memory 1006, the processor 1004, and the communication interface 1008) of the controller 1000.

The processor 1004 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 1006 may include a volatile memory (volatile memory), for example, a random access memory (random access memory, RAM). The memory 1006 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 1006 stores executable program code, and the processor 1004 executes the executable program code to separately implement functions of the foregoing obtaining unit and processing unit, so that the distributed data storage method is implemented. In other words, the memory 1006 stores instructions used to perform the distributed data storage method.

The communication interface 1003 uses a transceiver module, for example, but not limited to a network interface card or a transceiver, to implement communication between the controller 1100 and another device or a communication network (for example, a plurality of servers). The communication interface may also be referred to as an interface circuit.

An embodiment of this application further provides a computing device cluster. The computing device cluster includes a controller 1100 and a plurality of computing devices. The computing device may be a server, for example, a central server, an edge server, or a local server in a local data center. In some embodiments, the computing device may alternatively be a terminal device, for example, a desktop computer, a notebook computer, or a smartphone. The plurality of computing devices may be the plurality of servers described above.

In a possible implementation, the controller 1100 is one of the plurality of computing devices or an apparatus that is in the computing device and that is configured to implement the foregoing method.

In another possible implementation, the controller 1100 is a computing device other than the plurality of computing devices, or an apparatus that is in the computing device and that is configured to implement the foregoing method.

An embodiment of this application further provides a computer program product including instructions. The computer program product may be a software or program product that includes instructions and that can run on a computing device or be stored in any usable medium. When the computer program product runs on at least one computing device, the at least one computing device is enabled to perform the method in embodiments of this application.

An embodiment of this application further provides a computer-readable storage medium. The computer-readable storage medium may be any usable medium that can be stored by a computing device, or a data storage device, for example, a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions. The instructions instruct a computing device to perform the method in embodiments of this application, or instruct a computing device to perform the method in embodiments of this application.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In some embodiments according to this application, it should be understood that the disclosed system, apparatus, and method may be implemented in another manner. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings, direct couplings, or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A distributed data storage method, comprising:

   obtaining a log, wherein the log indicates N pieces of data used in M historical tasks executed by a server cluster, M is a positive integer, and the N pieces of data are stored in the server cluster in a distributed manner;
   determining intimacy between the N pieces of data based on the log, wherein intimacy corresponding to any two of the N pieces of data indicates a possibility that the two pieces of data are used in a same task, and N is an integer greater than 1; and
   updating storage locations of the N pieces of data based on the intimacy between the N pieces of data.

2. The method according to claim 1, wherein the determining intimacy between the N pieces of data based on the log comprises:
   determining the intimacy between the N pieces of data based on a quantity of times that the N pieces of data are used in a same historical task in the M historical tasks.

3. The method according to claim 2, wherein the intimacy corresponding to any two of the N pieces of data is in a positive correlation relationship with a quantity of times that the two pieces of data are used in a same historical task in the M historical tasks.

4. The method according to any one of claims 1 to 3, wherein the updating storage locations of the N pieces of data based on the intimacy between the N pieces of data comprises:
   updating the storage locations of the N pieces of data based on a first storage solution, wherein the first storage solution indicates target storage locations of the N pieces of data in P servers in the server cluster, P is an integer greater than 1, a statistical value of intimacy between the P servers in the first storage solution is less than or equal to a first threshold, and intimacy between two of the P servers in the first storage solution is based on intimacy between data corresponding to one of the two servers and data corresponding to the other server.

5. The method according to claim 4, wherein the first storage solution is an element in a set comprising a plurality of storage solutions, each of the plurality of storage solutions indicates a type of different storage location of the N pieces of data in the P servers, and the first threshold is a smallest value of statistical values of intimacy between the P servers in storage solutions other than the first storage solution in the plurality of storage solutions.

6. The method according to any one of claims 1 to 5, wherein the updating storage locations of the N pieces of data based on the intimacy between the N pieces of data comprises:
   sending scheduling information to a first server in the server cluster and a second server in the server cluster based on the intimacy between the N pieces of data, wherein the scheduling information indicates to migrate, to the second server, first data that is in the N pieces of data and that is stored in the first server.

7. The method according to any one of claims 1 to 6, wherein the determining intimacy between the N pieces of data based on the log comprises:
   constructing a first intimacy relationship graph based on the log, wherein each of N nodes in the first intimacy relationship graph corresponds to one of the N pieces of data, and a weight of an edge between two nodes in the first intimacy relationship graph indicates intimacy between two pieces of data corresponding to the two nodes.

8. The method according to claim 7, wherein the constructing a first intimacy relationship graph based on the log comprises:

constructing a second intimacy relationship graph based on the log, wherein each of N nodes in the second intimacy relationship graph corresponds to one of the N pieces of data, and in a process of constructing the second intimacy relationship graph, one edge is separately connected between nodes corresponding to data used in an m$^{th}$ historical task in the M historical tasks, wherein m=1, 2, ..., M; and

determining the first intimacy relationship graph based on the second intimacy relationship graph, wherein each of the N nodes in the second intimacy relationship graph corresponds to one node in the first intimacy relationship graph, and a weight of an edge between two nodes in the first intimacy relationship graph is based on a quantity of edges between two corresponding nodes in the second intimacy relationship graph.

9. The method according to claim 7 or 8, wherein P subgraphs of the first intimacy relationship graph respectively correspond to the P servers, the P subgraphs are obtained by dividing the first intimacy relationship graph with an objective of making quantities of nodes in the P subgraphs the same and a statistical value of a weight of an edge between the P subgraphs the smallest, and in the P servers, a target storage location of each piece of data is a server corresponding to a subgraph that is in the P subgraphs and to which a node corresponding to each piece of data belongs.

10. The method according to claim 9, wherein the dividing the first intimacy relationship graph with an objective of making quantities of nodes in the P subgraphs the same and a statistical value of a weight of an edge between the P subgraphs the smallest is implemented based on a quantum heuristic algorithm.

11. The method according to claim 10, wherein P=2, and an objective function solved by using the quantum heuristic algorithm satisfies the following formula:

$$\min\left[-\frac{1}{2}\sum_{i=1}^{N}\sum_{j=1}^{N}J_{i,j}s_i s_j\right],$$

wherein

$s_i$ is an i$^{th}$ spin variable in N spin variables, $s_j$ is a j$^{th}$ spin variable in the N spin variables, the N spin variables respectively correspond to the N pieces of data, a value of the spin variable is 1 or -1, data corresponding to spin variables with a same value belongs to a same subgraph, $J_{i,j}$ indicates a relationship between an i$^{th}$ piece of data and a j$^{th}$ piece of data, and $J_{i,j}$ is determined based on intimacy between the i$^{th}$ piece of data and the j$^{th}$ piece of data.

12. The method according to any one of claims 7 to 11, wherein the first intimacy relationship graph is represented by a matrix, the matrix comprises N rows and N columns, each of the N rows corresponds to one node in the first intimacy relationship graph, each of the N columns corresponds to one node in the first intimacy relationship graph, and each element in the matrix indicates a weight of an edge between a node corresponding to a row in which the element is located and a node corresponding to a column in which the element is located.

13. A controller, comprising:

a processor, configured to determine intimacy between N pieces of data based on a log, wherein intimacy corresponding to any two of the N pieces of data indicates a possibility that the two pieces of data are used in a same task, N is an integer greater than 1, the log indicates the N pieces of data used in M historical tasks executed by a server cluster, M is a positive integer, and the N pieces of data are stored in the server cluster in a distributed manner; and

an interface circuit, configured to update storage locations of the N pieces of data based on the intimacy between the N pieces of data.

14. The controller according to claim 13, wherein the processor is specifically configured to:
determine the intimacy between the N pieces of data based on a quantity of times that the N pieces of data are used in a same historical task in the M historical tasks.

15. The controller according to claim 14, wherein the intimacy corresponding to any two of the N pieces of data is in a positive correlation relationship with a quantity of times that the two pieces of data are used in a same historical task in the M historical tasks.

16. The controller according to any one of claims 13 to 15, wherein the interface circuit is specifically configured to: update the storage locations of the N pieces of data based on the first storage solution, wherein the first storage solution indicates target storage locations of the N pieces of data in P servers in the server cluster, P is an integer greater than 1, a statistical value of intimacy between the P servers in the first storage solution is less than or equal to a first threshold, and intimacy between two of the P servers in the first storage solution is based on intimacy between data corresponding to one of the two servers and data corresponding to the other server.

17. The controller according to claim 16, wherein the first storage solution is an element in a set comprising a plurality of storage solutions, each of the plurality of storage solutions indicates a type of different storage location of the N pieces of data in the P servers, and the first threshold is a smallest value of statistical values of intimacy between the P servers in storage solutions other than the first storage solution in the plurality of storage solutions.

18. The controller according to any one of claims 13 to 17, wherein the interface circuit is specifically configured to: send scheduling information to a first server in the server cluster and a second server in the server cluster based on the intimacy between the N pieces of data, wherein the scheduling information indicates to migrate, to the second server, first data that is in the N pieces of data and that is stored in the first server.

19. The controller according to any one of claims 13 to 18, wherein the processor is specifically configured to: construct a first intimacy relationship graph based on the log, wherein each of N nodes in the first intimacy relationship graph corresponds to one of the N pieces of data, and a weight of an edge between two nodes in the first intimacy relationship graph indicates intimacy between two pieces of data corresponding to the two nodes.

20. The controller according to claim 19, wherein the processor is specifically configured to:

construct a second intimacy relationship graph based on the log, wherein each of N nodes in the second intimacy relationship graph corresponds to one of the N pieces of data, and in a process of constructing the second intimacy relationship graph, one edge is separately connected between nodes corresponding to data used in an $m^{th}$ historical task in the M historical tasks, wherein m=1, 2, ..., M; and
determine the first intimacy relationship graph based on the second intimacy relationship graph, wherein each of the N nodes in the second intimacy relationship graph corresponds to one node in the first intimacy relationship graph, and a weight of an edge between two nodes in the first intimacy relationship graph is based on a quantity of edges between two corresponding nodes in the second intimacy relationship graph.

21. The controller according to claim 19 or 20, wherein P subgraphs of the first intimacy relationship graph respectively correspond to the P servers, the P subgraphs are obtained by dividing the first intimacy relationship graph with an objective of making quantities of nodes in the P subgraphs the same and a statistical value of a weight of an edge between the P subgraphs the smallest, and in the P servers, a target storage location of each piece of data is a server corresponding to a subgraph that is in the P subgraphs and to which a node corresponding to each piece of data belongs.

22. The controller according to claim 21, wherein the dividing the first intimacy relationship graph with an objective of making quantities of nodes in the P subgraphs the same and a statistical value of a weight of an edge between the P subgraphs the smallest is implemented based on a quantum heuristic algorithm.

23. The controller according to claim 22, wherein P=2, and an objective function solved by using the quantum heuristic algorithm satisfies the following formula:

$$\min\left[-\frac{1}{2}\sum_{i=1}^{N}\sum_{j=1}^{N}J_{i,j}s_i s_j\right],$$

wherein
$s_i$ is an $i^{th}$ spin variable in N spin variables, $s_j$ is a $j^{th}$ spin variable in the N spin variables, the N spin variables respectively correspond to the N pieces of data, a value of the spin variable is 1 or -1, data corresponding to spin variables with a same value belongs to a same subgraph, $J_{i,j}$ indicates a relationship between an $i^{th}$ piece of data and a

$j^{th}$ piece of data, and $J_{i,j}$ is determined based on intimacy between the $i^{th}$ piece of data and the $j^{th}$ piece of data.

24. The controller according to any one of claims 19 to 23, wherein the first intimacy relationship graph is represented by a matrix, the matrix comprises N rows and N columns, each of the N rows corresponds to one node in the first intimacy relationship graph, each of the N columns corresponds to one node in the first intimacy relationship graph, and each element in the matrix indicates a weight of an edge between a node corresponding to a row in which the element is located and a node corresponding to a column in which the element is located.

25. A controller, comprising a processor and a memory, wherein the processor is configured to execute instructions stored in the memory, to enable the controller to perform the method according to any one of claims 1 to 12.

26. A computing device cluster, comprising a plurality of servers and the controller according to any one of claims 13 to 24.

27. A computer-readable storage medium, comprising computer program instructions, wherein when the computer program instructions are executed by a computing device cluster, the computing device cluster performs the method according to any one of claims 1 to 12.

28. A computer program product comprising instructions, wherein when the instructions are run by a computing device cluster, the computing device cluster is enabled to perform the method according to any one of claims 1 to 12.

User request

Execution unit 120

Routing decision
module 121

Query result          Movement decision

Server 111          Server 112          Server 113          Server 114

#1   #2   #3   #4

#1          #2          #3          #4

FIG. 1

Controller

Solving unit 130

| Obtaining module 131 | → Historical record → | Intimacy determining module 132 | → Intimacy between data → | Cutting module 133 |

Task log

Data distribution plan

User request

Execution unit 120

Task record

Log ← Routing decision module 121

Scheduler 122

Query result    Movement decision    Layout decision

| Server 111 | Server 112 | Server 113 | Server 114 |

Server 111: #1

Server 112: #1 #2 #3 #4 / #2 #3

Server 113: #4

FIG. 2

300

Obtain a log, where the log indicates N pieces of data used in M historical tasks executed by a server cluster, M is a positive integer, and N is an integer greater than 1 — 310

Determine intimacy between the N pieces of data based on the log, where intimacy corresponding to any two of the N pieces of data indicates a possibility that the two pieces of data are used in a same task — 320

Update storage locations of the N pieces of data based on the intimacy between the N pieces of data — 330

FIG. 3

V'                              V"

FIG. 4

500

Obtain a log — 510

Construct a first intimacy relationship graph based on the log — 520

Perform graph cutting on the first intimacy relationship graph — 530

FIG. 5

FIG. 6

FIG. 7

FIG. 8

FIG. 9

Apparatus 1000

| Obtaining unit 1010 | Processing unit 1020 |

FIG. 10

Processor 1004

Communication interface 1008

Bus 1002

Memory 1006

Controller 1100

FIG. 11

## INTERNATIONAL SEARCH REPORT

| International application No. |
| --- |
| **PCT/CN2024/088300** |

| A. | CLASSIFICATION OF SUBJECT MATTER |
| --- | --- |

G06F16/11(2019.01)i

According to International Patent Classification (IPC) or to both national classification and IPC

| B. | FIELDS SEARCHED |
| --- | --- |

Minimum documentation searched (classification system followed by classification symbols)

IPC:G06F

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 存储位置, 度, 根据, 共同, 关联, 基于, 可能, 亲密, 数据, 同一, 相关性, 历史, 关系, 位置, 日志, 文件, 任务, 存储, 迁移, store, according to, common, relevance, base on, possibillity, intimate, data, same, correlation, history, location, log, file, task, migration

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 114625695 A (ALIBABA (CHINA) CO., LTD.) 14 June 2022 (2022-06-14) claims 1-12, and description, paragraphs [0064]-[0196] | 1-3, 6-7, 12-15, 18-19, 24-28 |
| A | CN 115495015 A (BOOMING TECHNOLOGY (HANGZHOU) CO., LTD.) 20 December 2022 (2022-12-20) entire document | 1-28 |
| A | CN 114116790 A (HUAWEI TECHNOLOGIES CO., LTD.) 01 March 2022 (2022-03-01) entire document | 1-28 |
| A | CN 113296981 A (CCB FINTECH CO., LTD. et al.) 24 August 2021 (2021-08-24) entire document | 1-28 |
| A | US 2020065415 A1 (GOOGLE LLC) 27 February 2020 (2020-02-27) entire document | 1-28 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **25 June 2024** | **02 July 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

### INTERNATIONAL SEARCH REPORT
#### Information on patent family members

International application No.

**PCT/CN2024/088300**

| Patent document cited in search report | | | Publication date (day/month/year) | Patent family member(s) | | | Publication date (day/month/year) |
|---|---|---|---|---|---|---|---|
| CN | 114625695 | A | 14 June 2022 | None | | | |
| CN | 115495015 | A | 20 December 2022 | None | | | |
| CN | 114116790 | A | 01 March 2022 | None | | | |
| CN | 113296981 | A | 24 August 2021 | None | | | |
| US | 2020065415 | A1 | 27 February 2020 | EP | 3818453 | A1 | 12 May 2021 |
| | | | | WO | 2020040928 | A1 | 27 February 2020 |
| | | | | IN | 202147005249 | A | 12 February 2021 |
| | | | | CN | 112567359 | A | 26 March 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310460198